(19) 

**Europäisches Patentamt**

**European Patent Office**

**Office européen des brevets**

(11) **EP 3 932 606 A1**

(12) **EUROPEAN PATENT APPLICATION**
published in accordance with Art. 153(4) EPC

(43) Date of publication:
**05.01.2022 Bulletin 2022/01**

(21) Application number: **20766479.8**

(22) Date of filing: **28.02.2020**

(51) Int Cl.:
**B23K 20/12** *(2006.01)*

(86) International application number:
**PCT/JP2020/008285**

(87) International publication number:
**WO 2020/179661 (10.09.2020 Gazette 2020/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.03.2019 JP 2019037715**
**02.08.2019 JP 2019143030**

(71) Applicant: **Kawasaki Jukogyo Kabushiki Kaisha Hyogo 650-8670 (JP)**

(72) Inventors:
• **HATANO, Ryoichi**
  **Hyogo 650-8670 (JP)**

• **FUKADA, Shintaro**
  **Hyogo 650-8670 (JP)**
• **YOSHIDA, Yusuke**
  **Hyogo 650-8670 (JP)**
• **HARUNA, Shunsuke**
  **Hyogo 650-8670 (JP)**
• **MIYAKE, Masahiro**
  **Hyogo 650-8670 (JP)**
• **MAEDA, Kengo**
  **Hyogo 650-8670 (JP)**

(74) Representative: **Witte, Weller & Partner Patentanwälte mbB Postfach 10 54 62 70047 Stuttgart (DE)**

(54) **JOINING DEVICE FOR FRICTION STIRRING POINT, JOINED ARTICLE HAVING JOINED FRICTION STIRRING POINT, AND SHOULDER MEMBER**

(57) A friction stir spot welding apparatus according to the present invention includes: a pin (11) that is columnar; a shoulder (12) that is cylindrical, the pin (11) being within the shoulder (12); a rotary driver (579 that rotates the pin (11) and the shoulder (12) about an axis (Xr) that coincides with a center axis of the pin (11); and an advance-retreat driver (53) that advances and retreats the pin (119 and the shoulder (12) along the axis (Xr). A first groove (21) is formed at a tip end portion of an outer peripheral surface of the shoulder (12) so as to extend in a direction along the center axis of the pin (11).

FIG.1

**EP 3 932 606 A1**

## Description

## Technical Field

The present invention relates to a friction stir spot welding apparatus, a welded workpiece subjected to friction stir spot welding, and a shoulder.

## Background Art

In transportation machines, such as automobiles, railcars, and aircrafts, resistance spot welding or rivet joining has been used to couple metal materials to each other. However, in recent years, a method (friction stir spot welding method) of welding metal materials by utilizing frictional heat is gathering attention (see PTL 1, for example).

According to the friction stir spot welding method disclosed in PTL 1, a substantially columnar pin and a substantially cylindrical shoulder including a hollow into which the pin is inserted are used to weld a welded workpiece, and a tool driver that operates (drives) the pin and the shoulder (rotary tool; welding tool) is controlled as below.

To be specific, the tool driver is controlled to reduce an absolute value of a tool average position Tx defined by a formula "Ap·Pp+As·Ps = Tx", where Ap denotes a sectional area of a tip end surface of the pin, As denotes a sectional area of a tip end surface of the shoulder, Pp denotes a press-in depth of the pin when the pin is pressed in the surface of the welded workpiece, and Ps denotes a press-in depth of the shoulder when the shoulder is pressed in the surface of the welded workpiece.

With this, satisfactory welding quality can be realized with a preferable degree of accuracy in accordance with welding conditions, and the generation of internal void defects can be prevented or suppressed.

## Citation List

## Patent Literature

PTL 1: Japanese Laid-Open Patent Application Publication No. 2012-196682

## Summary of Invention

## Technical Problem

However, according to the friction stir spot welding method disclosed in PTL 1, there is still room for improvement in terms of a reduction in welding time of the welded workpiece. Moreover, according to the friction stir spot welding method disclosed in PTL 1, there is still room for improvement in terms of welding strength of the welded workpiece.

The present invention was made to solve the above conventional problems, and a first object of the present invention is to provide a friction stir spot welding apparatus that can make a welding time shorter than welding times of conventional friction stir spot welding apparatuses. Moreover, a second object of the present invention is to provide a friction stir spot welding apparatus that can make welding strength higher than welding strength of welded workpieces welded by the conventional friction stir spot welding apparatuses and also provide a welded workpiece that has higher welding strength than the welded workpieces welded by the conventional friction stir spot welding apparatuses.

## Solution to Problem

In order to solve the above problems, a friction stir spot welding apparatus according to the present invention includes: a pin that is columnar; a shoulder that is cylindrical, the pin being within the shoulder; a rotary driver that rotates the pin and the shoulder about an axis that coincides with a center axis of the pin; and an advance-retreat driver that advances and retreats the pin and the shoulder along the axis. A first groove is formed at a tip end portion of an outer peripheral surface of the shoulder so as to extend in a direction along the center axis of the pin.

With this, the welding time is made shorter than those of the conventional friction stir spot welding apparatuses.

Moreover, a friction stir spot welding apparatus according to the present invention includes: a pin that is columnar; a shoulder that is cylindrical, the pin being within the shoulder; a rotary driver that rotates the pin and the shoulder about an axis that coincides with a center axis of the pin; and an advance-retreat driver that advances and retreats the pin and the shoulder along the axis. A second groove is formed on a tip end surface of the shoulder so as to extend in a radial direction of the shoulder.

With this, the welding time is made shorter than those of the conventional friction stir spot welding apparatuses.

Moreover, a friction stir spot welding apparatus according to the present invention is a friction stir spot welding apparatus that performs friction stir spot welding with respect to a welded workpiece including a first workpiece and a second workpiece. The friction stir spot welding apparatus includes: a pin; a shoulder that is hollow, the pin being within the shoulder; a rotary driver that rotates the pin and the shoulder about an axis extending in a longitudinal direction of the pin and a longitudinal direction of the shoulder; and an advance-retreat driver that advances and retreats the pin and the shoulder along the axis. The shoulder is configured such that when the shoulder advances while rotating in the welded workpiece, a material softened by plastic flow flows in an advancing direction of the shoulder or a retreating direction of the shoulder.

With this, the welding strength of the welded workpiece is made higher than the welding strength of the welded workpiece welded by using the conventional friction stir spot welding apparatus.

Moreover, a welded workpiece according to the present invention is a welded workpiece subjected to friction stir spot welding by the above friction stir spot welding apparatus.

With this, the welded workpiece having higher welding strength than the welded workpiece welded by the conventional friction stir spot welding apparatus is obtained.

Furthermore, a welded workpiece according to the present invention is a welded workpiece subjected to friction stir spot welding by a friction stir spot welding apparatus. The welded workpiece includes: a first workpiece; a second workpiece; and a hook in the first workpiece or the second workpiece.

With this, the welded workpiece having higher welding strength than the welded workpiece welded by the conventional friction stir spot welding apparatus is obtained.

The above object, other objects, features, and advantages of the present invention will be made clear by the following detailed explanation of preferred embodiments with reference to the attached drawings.

**Advantageous Effects of Invention**

According to the friction stir spot welding apparatus of the present invention, the welding time is made shorter than those of the conventional friction stir spot welding apparatuses. Moreover, according to the friction stir spot welding apparatus of the present invention, the welding strength of the welded workpiece is made higher than the welding strength of the welded workpiece welded by using the conventional friction stir spot welding apparatus. Furthermore, according to the welded workpiece of the present invention, the welded workpiece having higher welding strength than the welded workpiece welded by the conventional friction stir spot welding apparatus is obtained.

**Brief Description of Drawings**

FIG. 1 is a schematic diagram showing a schematic configuration of a friction stir spot welding apparatus according to Embodiment 1.
FIG. 2 is a perspective view schematically showing a tip end portion of a shoulder of the friction stir spot welding apparatus shown in FIG. 1.
FIG. 3 is a block diagram schematically showing a control configuration of the friction stir spot welding apparatus shown in FIG. 1.
FIG. 4 is a flow chart showing one example of an operation of the friction stir spot welding apparatus according to Embodiment 1.
FIG. 5A is a process diagram schematically showing one example of steps of friction stir spot welding performed by the friction stir spot welding apparatus shown in FIG. 1.
FIG. 5B is a process diagram schematically showing one example of steps of the friction stir spot welding performed by the friction stir spot welding apparatus shown in FIG. 1.
FIG. 6 is a perspective view schematically showing a major component (the tip end portion of the shoulder) of the friction stir spot welding apparatus according to Modified Example 1 of Embodiment 1.
FIG. 7 is a schematic diagram showing a schematic configuration of the friction stir spot welding apparatus according to Embodiment 2.
FIG. 8 is a perspective view schematically showing the tip end portion of the shoulder of the friction stir spot welding apparatus shown in FIG. 7.
FIG. 9 is a graph showing welding times as results of the friction stir spot welding performed by using the friction stir spot welding apparatuses of Comparative Example and Test Examples 1 to 4 and also showing results of a cross tension test.
FIG. 10A shows pictures of sections of the welded workpieces subjected to the friction stir spot welding by using the friction stir spot welding apparatuses of Comparative Example and Test Examples 1 to 4.

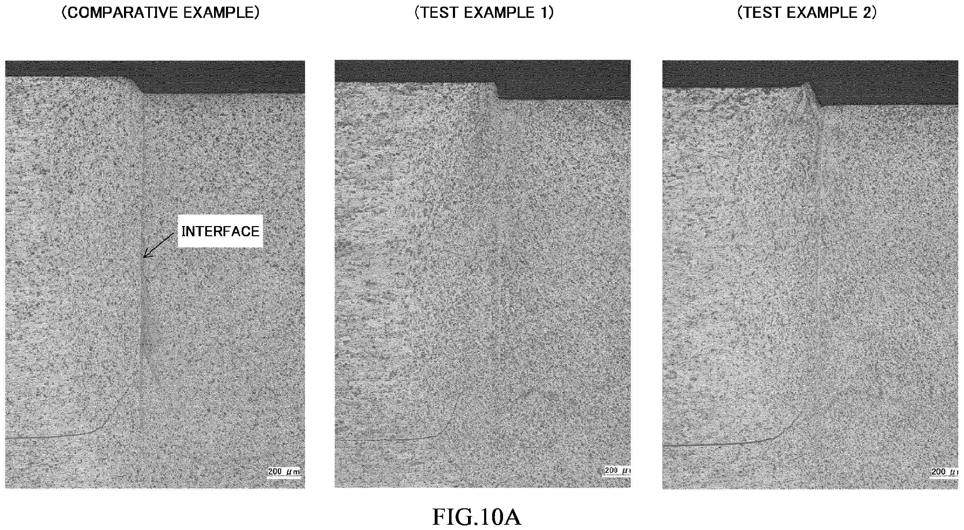

FIG. 10A shows pictures of sections of the welded workpieces subjected to the friction stir spot welding by using the friction stir spot welding apparatuses of Comparative Example and Test Examples 1 to 4.

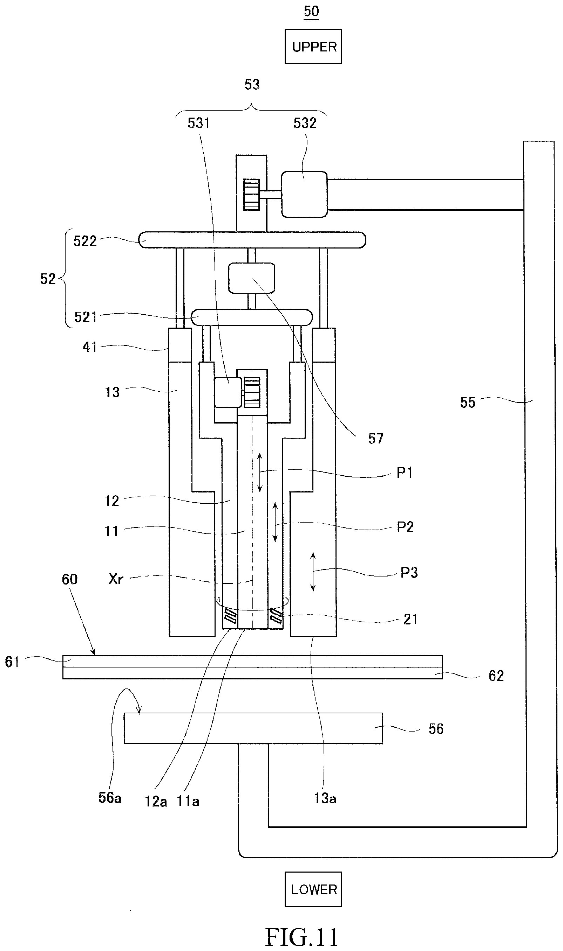

FIG. 11 is a schematic diagram showing a schematic configuration of the friction stir spot welding apparatus according to Embodiment 3.

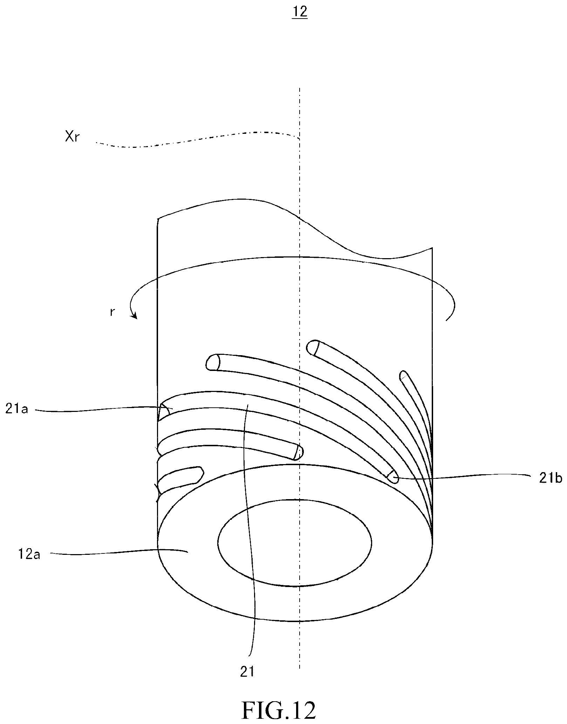

FIG. 12 is a perspective view schematically showing the tip end portion of the shoulder of the friction stir spot welding apparatus shown in FIG. 11.

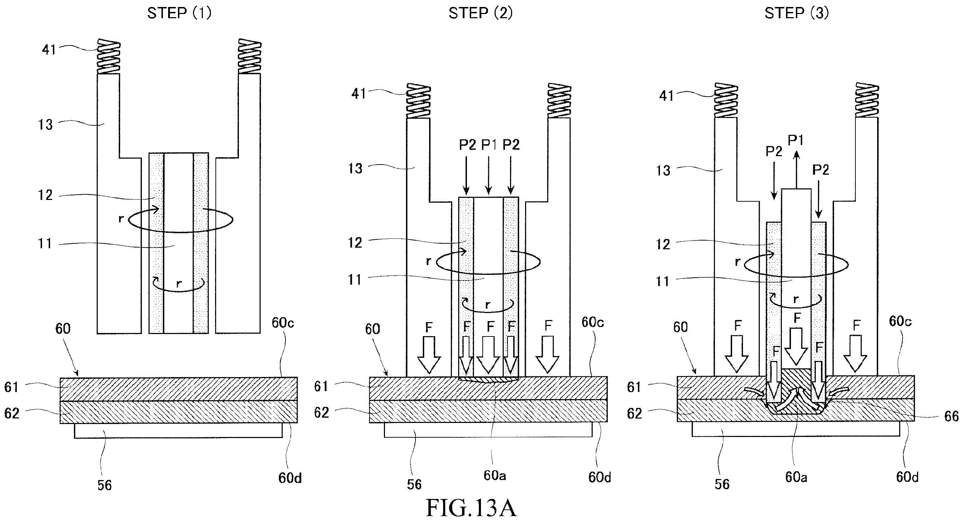

FIG. 13A is a process diagram schematically showing one example of steps of the friction stir spot welding performed by the friction stir spot welding apparatus shown in FIG. 11.

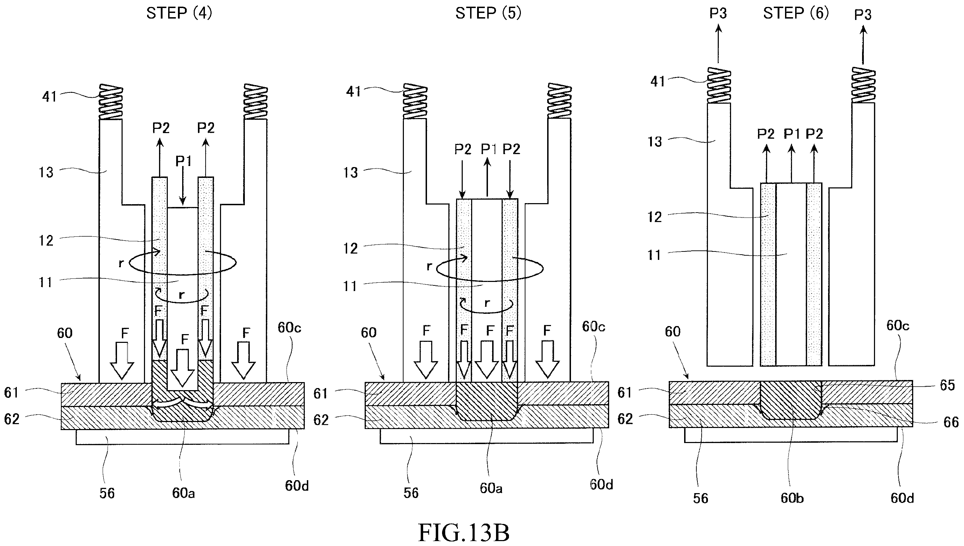

FIG. 13B is a process diagram schematically showing the one example of steps of the friction stir spot welding performed by the friction stir spot welding apparatus shown in FIG. 11.

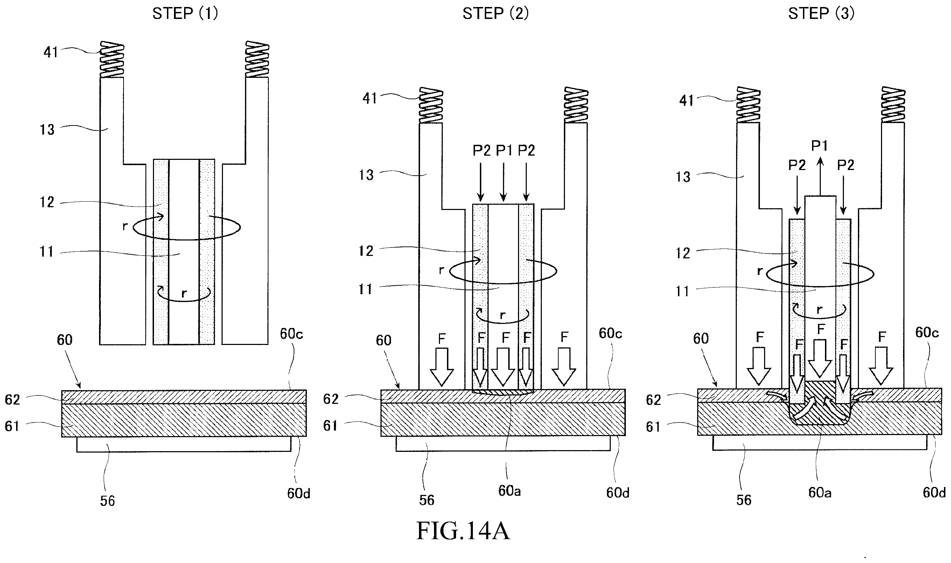

FIG. 14A is a process diagram schematically showing another example of steps of the friction stir spot welding performed by the friction stir spot welding apparatus shown in FIG. 11.

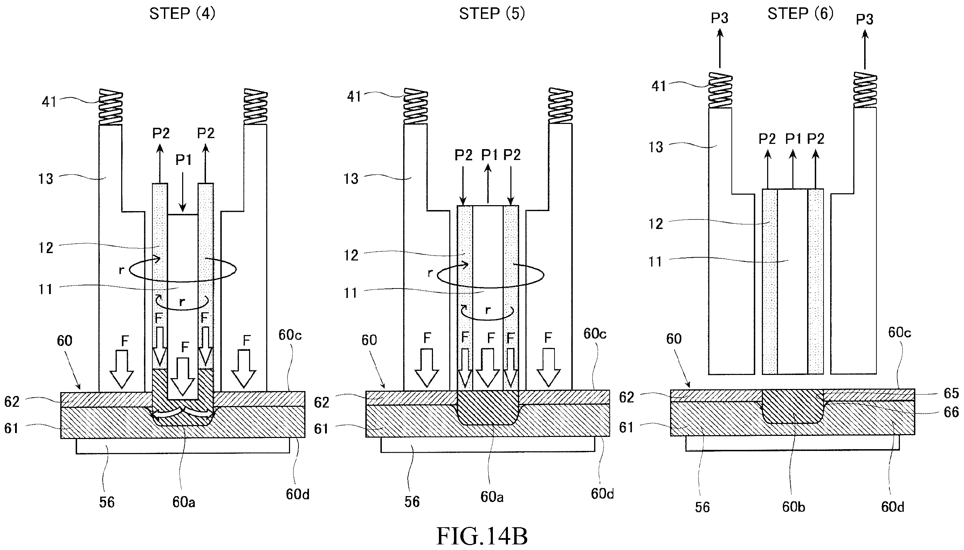

FIG. 14B is a process diagram schematically showing the another example of steps of the friction stir spot welding performed by the friction stir spot welding apparatus shown in FIG. 11.

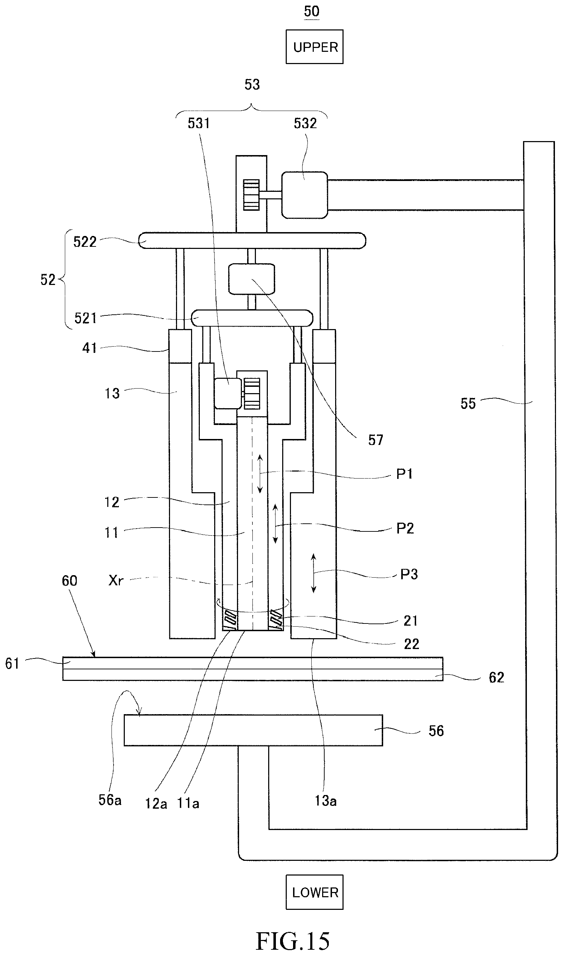

FIG. 15 is a schematic diagram showing a schematic configuration of the friction stir spot welding apparatus according to Modified Example 1 of Embodiment 3.

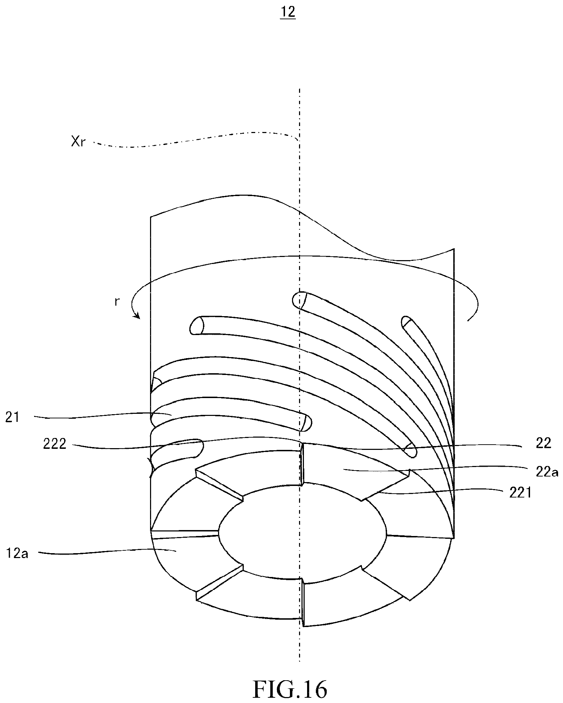

FIG. 16 is a perspective view schematically showing the tip end portion of the shoulder of the friction stir spot welding apparatus shown in FIG. 15.

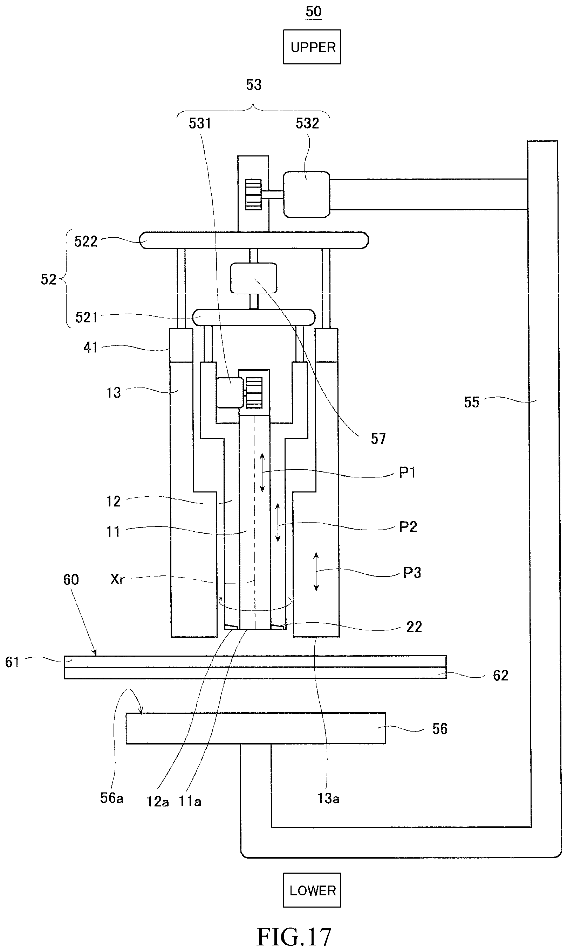

FIG. 17 is a schematic diagram showing a schematic configuration of the friction stir spot welding apparatus according to Embodiment 4.

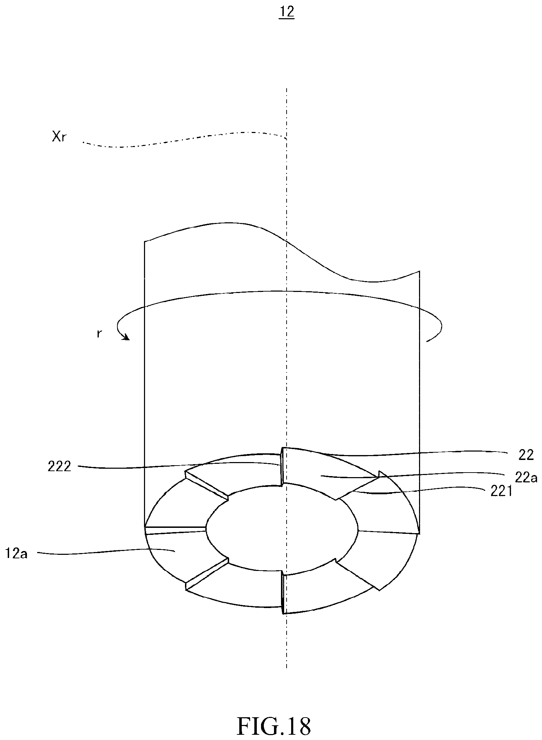

FIG. 18 is a perspective view schematically showing the tip end portion of the shoulder of the friction stir spot welding apparatus shown in FIG. 17.

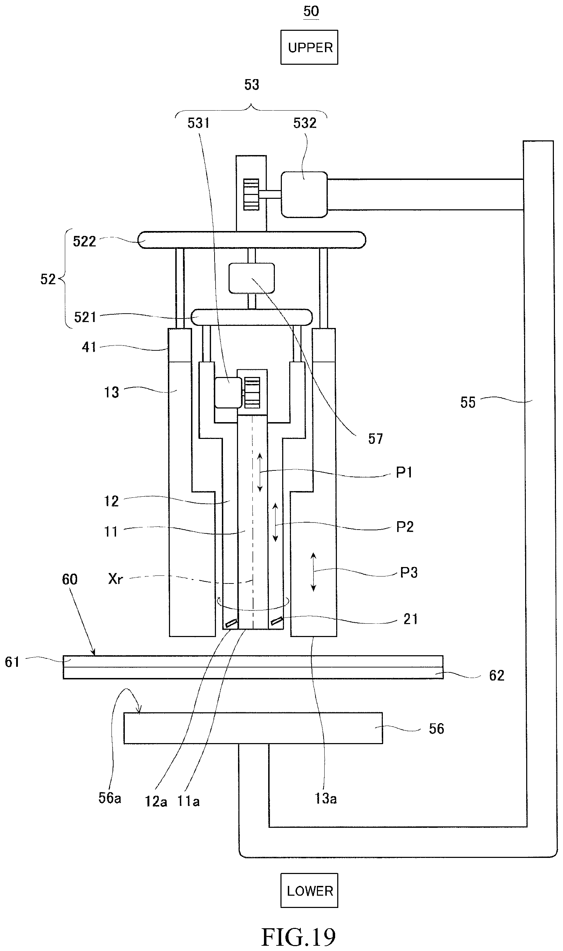

FIG. 19 is a schematic diagram showing a schematic configuration of the friction stir spot welding apparatus according to Embodiment 5.

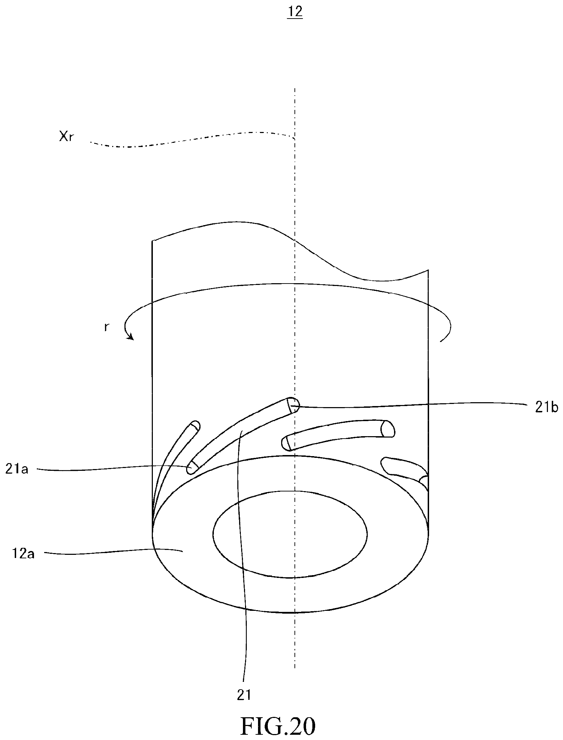

FIG. 20 is a perspective view schematically showing the tip end portion of the shoulder of the friction stir spot welding apparatus shown in FIG. 19.

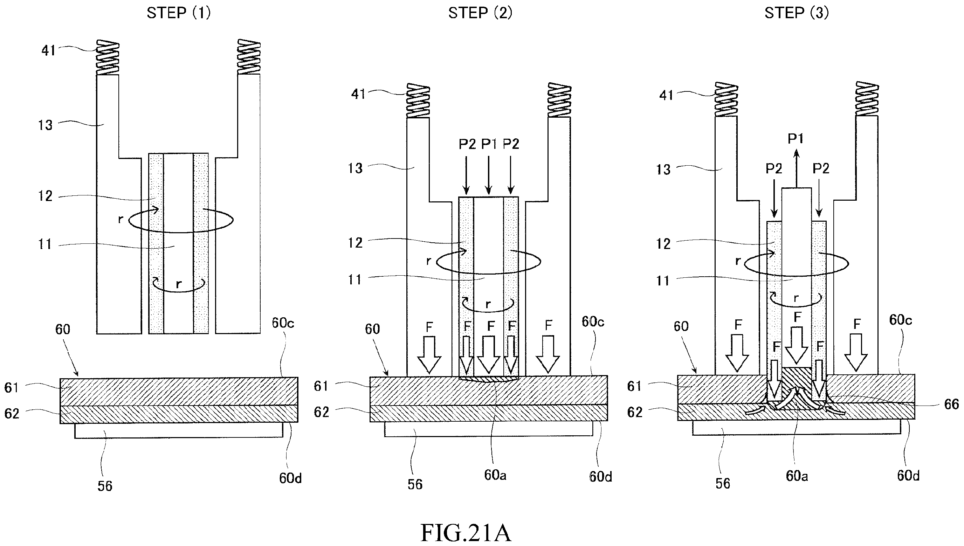

FIG. 21A is a process diagram schematically showing one example of steps of the friction stir spot welding performed by the friction stir spot welding apparatus shown in FIG. 19.

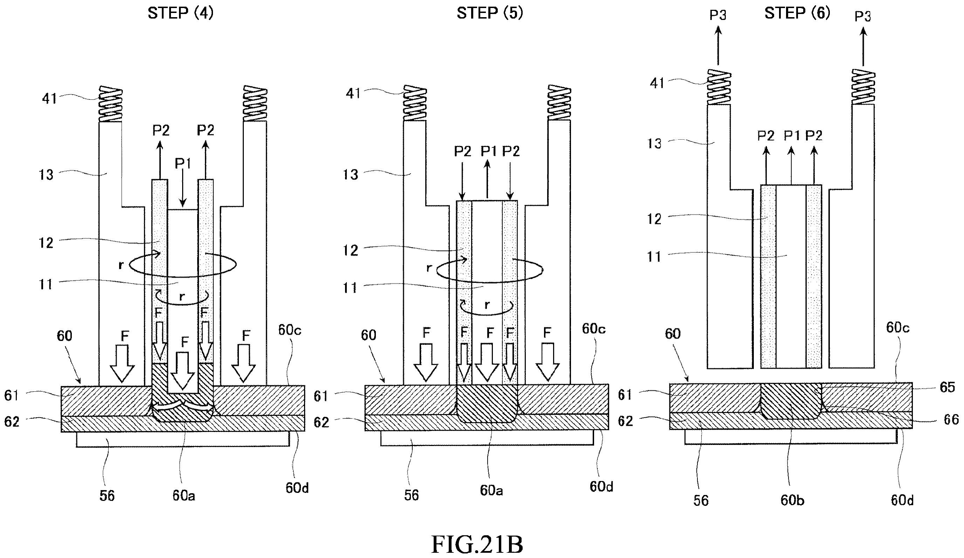

FIG. 21B is a process diagram schematically showing the one example of steps of the friction stir spot welding performed by the friction stir spot welding apparatus shown in FIG. 19.

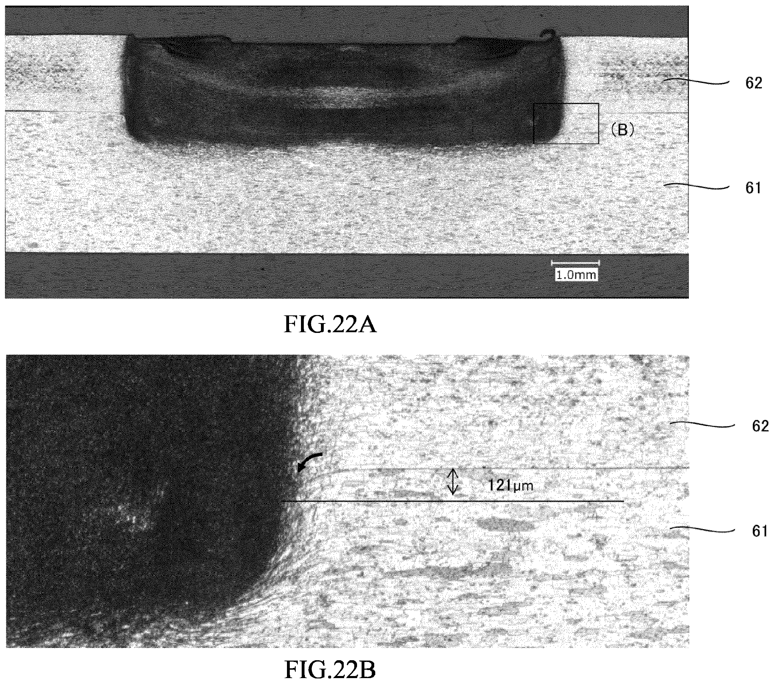

FIGS. 22A and 22B show pictures of sections of the welded workpiece subjected to the friction stir spot welding by using the friction stir spot welding apparatuses of Example 1.

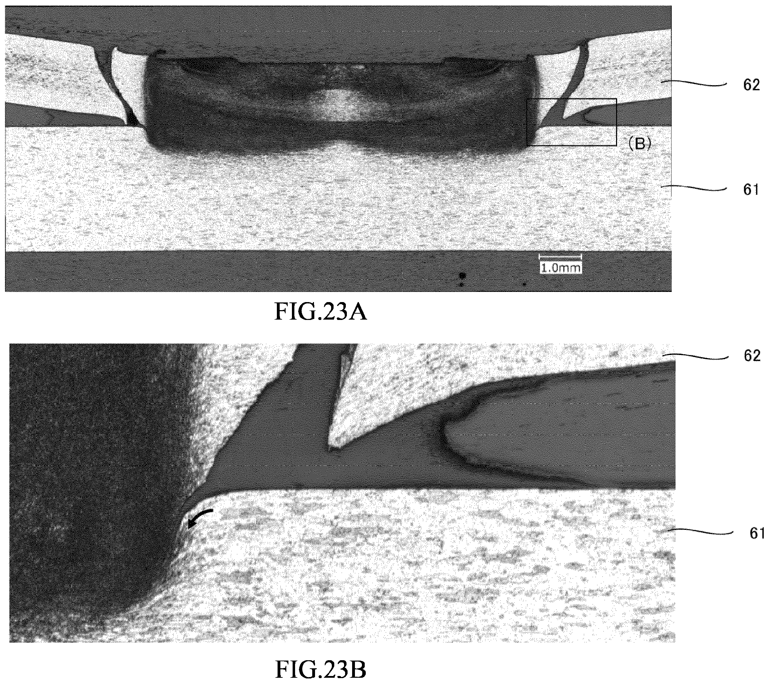

FIGS. 23A and 23B show pictures of sections of the welded workpiece which has been subjected to the cross tension test after being subjected to the friction stir spot welding by using the friction stir spot welding apparatus of Example 1.

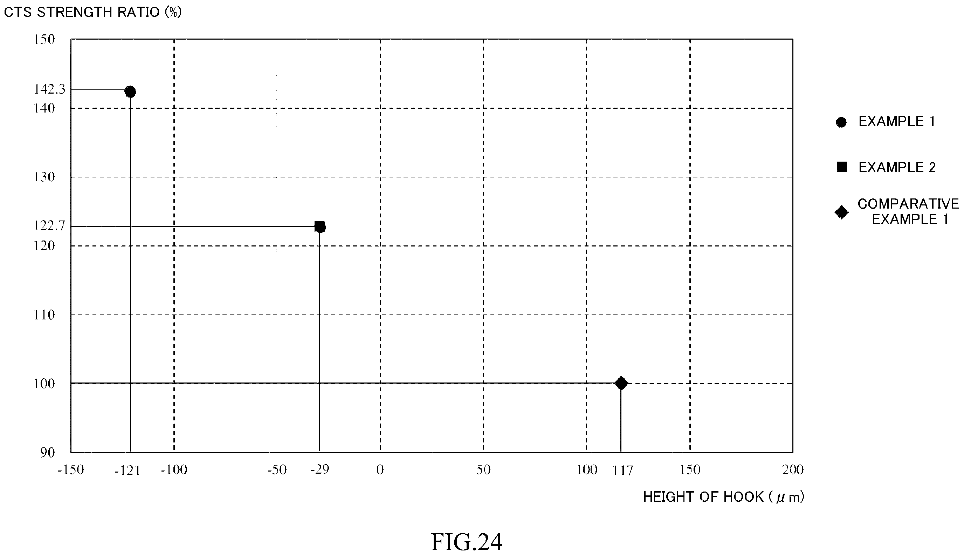

FIG. 24 is a graph showing results of the cross tension test performed with respect to the welded workpieces subjected to the friction stir spot welding by using the friction stir spot welding apparatuses of Comparative Example 1 and Examples 1 and 2 and also showing heights of hooks.

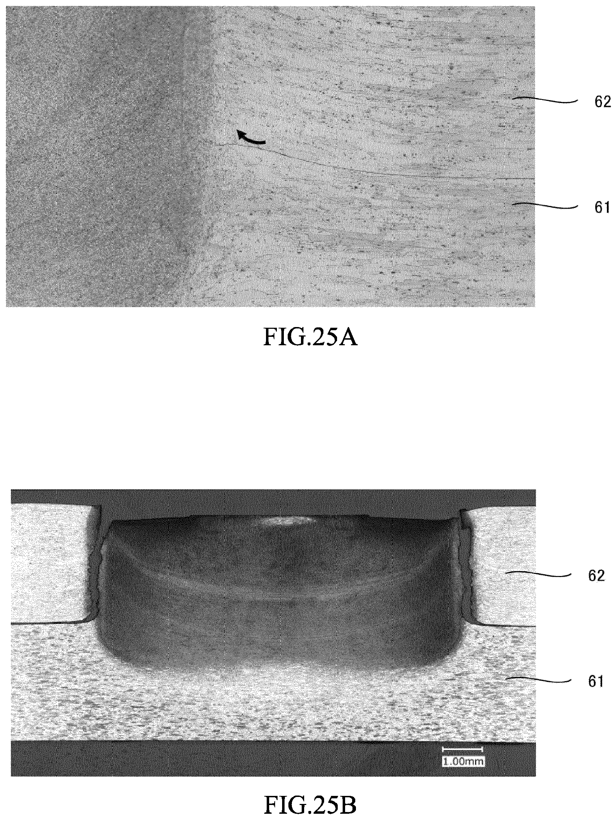

FIGS. 25A and 25B show pictures of sections of the welded workpiece subjected to the friction stir spot welding by using the friction stir spot welding apparatus of Comparative Example 1.

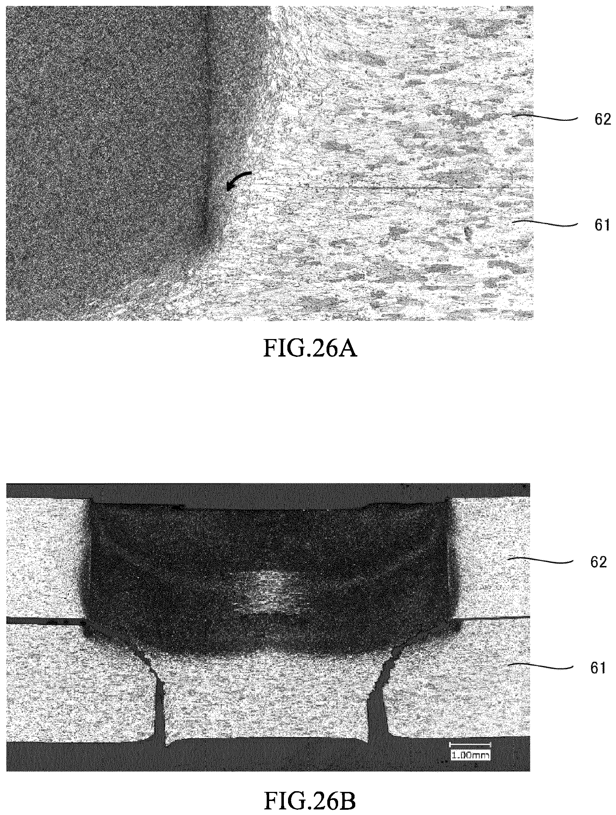

FIGS. 26A and 26B show pictures of sections of the welded workpiece subjected to the friction stir spot welding by using the friction stir spot welding apparatus of Example 1.

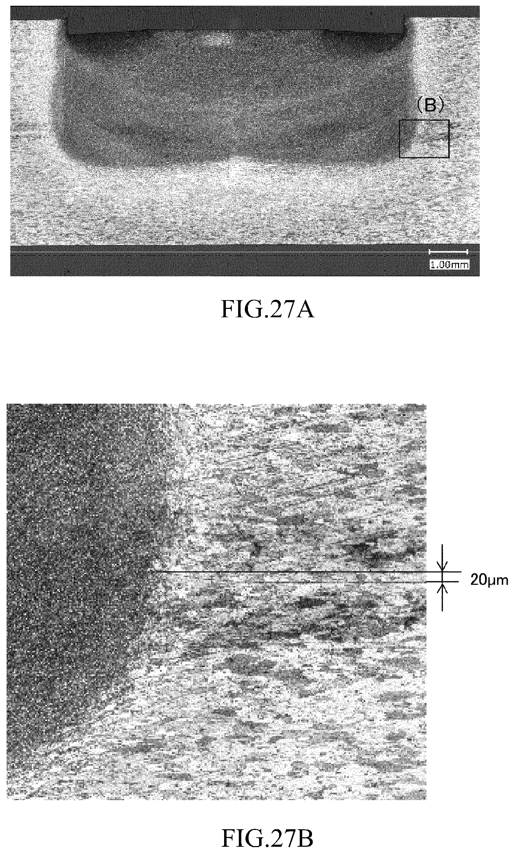

FIGS. 27A and 27B show pictures of sections of the welded workpiece subjected to the friction stir spot welding by using the friction stir spot welding apparatus of Example 3.

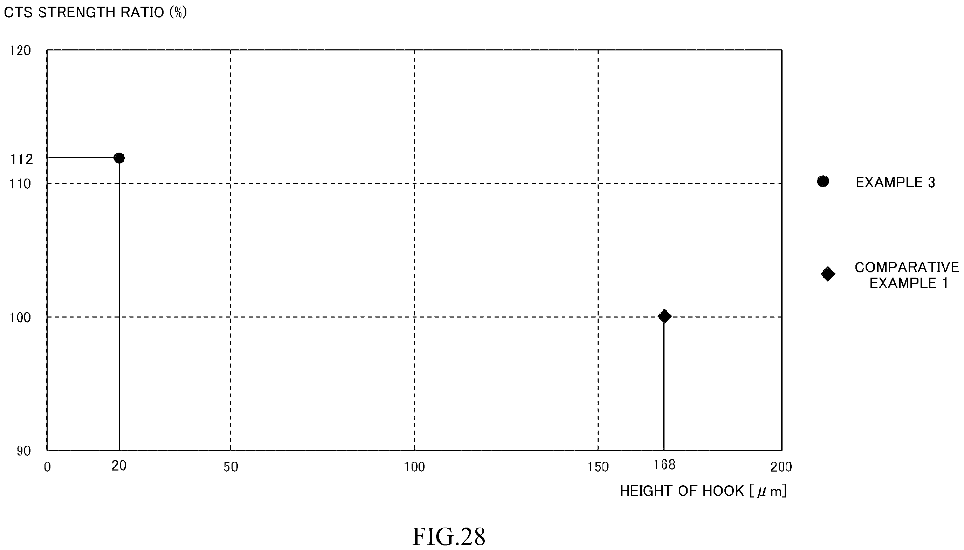

FIG. 28 is a graph showing results of the cross tension test performed with respect to the welded workpieces subjected to the friction stir spot welding by using the friction stir spot welding apparatuses of Comparative Example 1 and Example 3 and also showing the heights of the hooks.

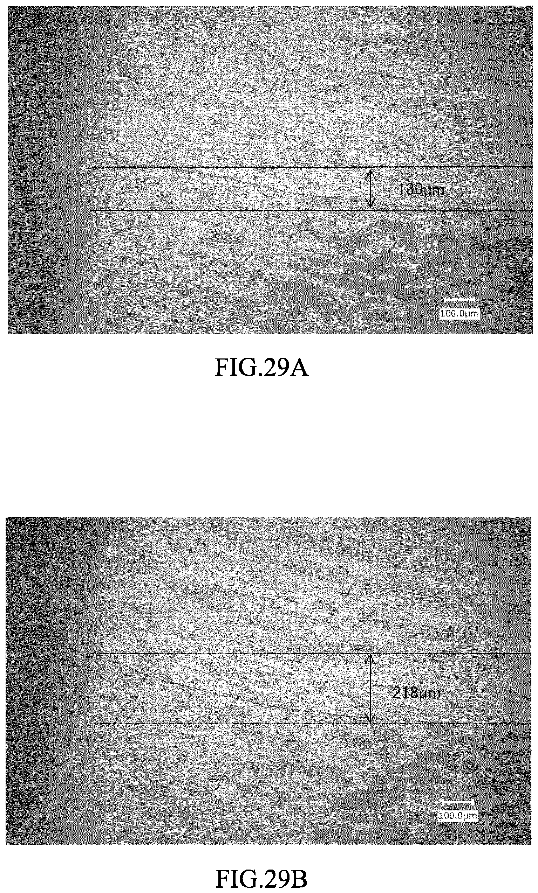

FIGS. 29A and 29B show pictures of sections of the welded workpieces subjected to the friction stir spot welding by using the friction stir spot welding apparatuses of Comparative Example 1 and Example 4.

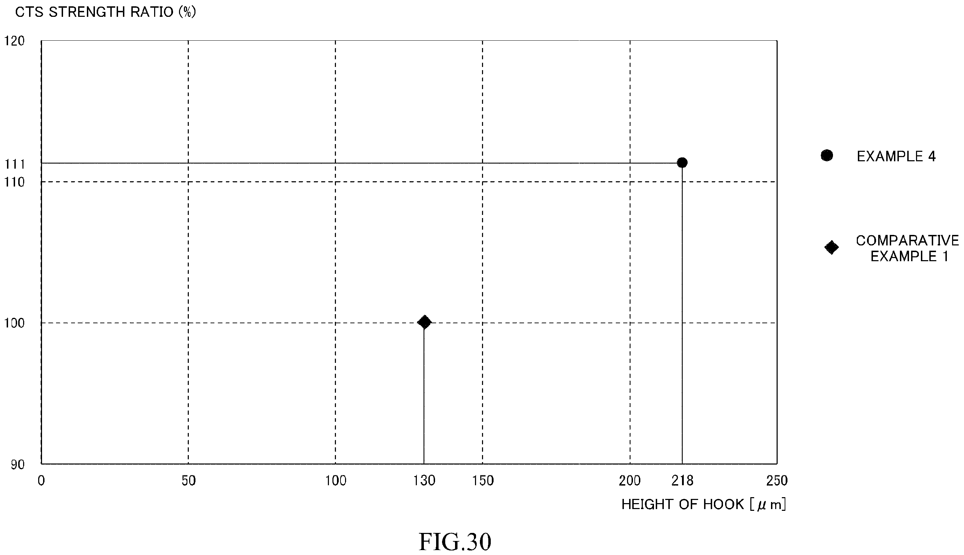

FIG. 30 is a graph showing results of the cross tension test performed with respect to the welded workpieces subjected to the friction stir spot welding by using the friction stir spot welding apparatuses of Comparative Example 1 and Example 4 and also showing the heights of the hooks.

## Description of Embodiments

Hereinafter, preferred embodiments of the present invention will be described with reference to the drawings. In the following description and the drawings, the same reference signs are used for the same or corresponding components, and the repetition of the same explanation is avoided. Moreover, in the drawings, components necessary to explain the present invention are shown, and the other component may be omitted. Furthermore, the present invention is not limited to the following embodiments.

### Embodiment 1

A friction stir spot welding apparatus according to Embodiment 1 includes: a pin that is columnar; a shoulder that is cylindrical, the pin being within the shoulder; a rotary driver that rotates the pin and the shoulder about an axis that coincides with a center axis of the pin; and an advance-retreat driver that advances and retreats the pin and the shoulder along the axis. A first groove is formed at a tip end portion of an outer peripheral surface of the shoulder so as to extend in a direction along the center axis of the pin.

Hereinafter, one example of a friction stir spot welding apparatus according to Embodiment 1 will be described in detail with reference to the drawings.

### Configuration of Friction Stir Spot Welding Apparatus

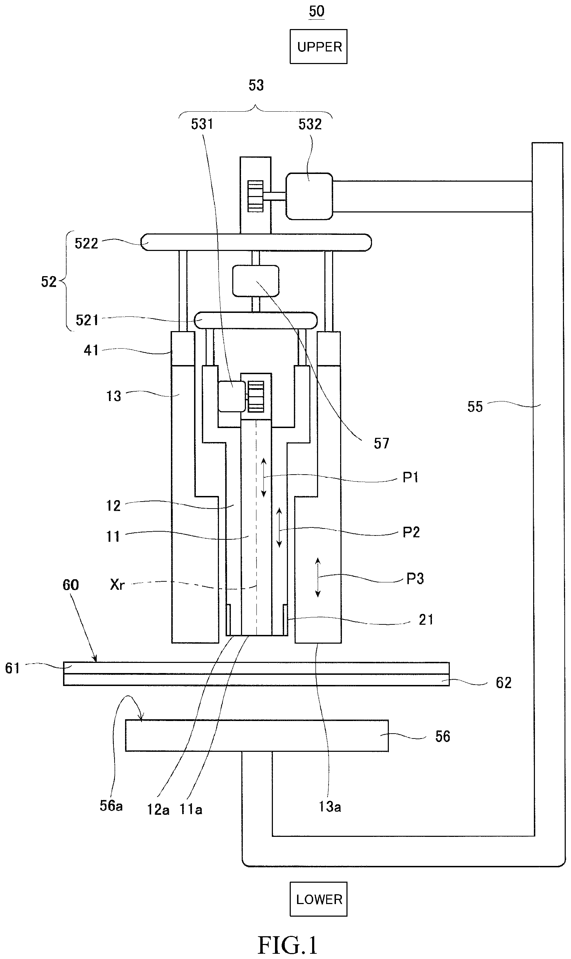

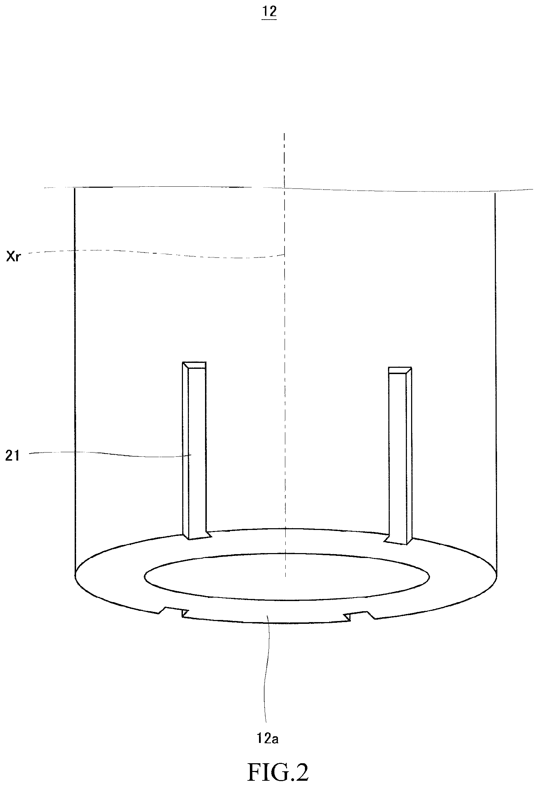

FIG. 1 is a schematic diagram showing a schematic configuration of the friction stir spot welding apparatus according to Embodiment 1. FIG. 2 is a perspective view schematically showing a tip end portion of a shoulder of the friction stir spot welding apparatus shown in FIG. 1. An upper-lower direction in FIG. 1 is shown as an upper-lower direction of the friction stir spot welding apparatus.

As shown in FIG. 1, a friction stir spot welding apparatus 50 according to Embodiment 1 includes a pin 11, a shoulder 12, a tool fixture 52, an advance-retreat driver 53, a clamp structure 13, a backing support 55, a backing structure 56, and a rotary driver 57.

The pin 11, the shoulder 12, the tool fixture 52, the advance-retreat driver 53, the clamp structure 13, and the rotary driver 57 are disposed at an upper end portion of the backing support 55 constituted by a C-shaped gun (C-shaped frame). Moreover, the backing structure 56 is disposed at a lower end portion of the backing support 55. The pin 11, the shoulder 12, the clamp structure 13, and the backing structure 56 are attached to the backing support 55 at such positions that the pin 11, the shoulder 12, and the clamp structure 13 are opposed to the backing structure 56. A welded workpiece 60 is arranged between the pin 11 and the backing structure 56, between the shoulder 12 and the backing structure 56, and between the clamp structure 13 and the backing structure 56.

The pin 11, the shoulder 12, and the clamp structure 13 are fixed to the tool fixture 52 constituted by a rotary tool fixture 521 and a clamp fixture 522. Specifically, the pin 11 and the shoulder 12 are fixed to the rotary tool fixture 521, and the clamp structure 13 is fixed to the clamp fixture 522 through a clamp driver 41. The rotary tool fixture 521 is supported by the clamp fixture 522 through the rotary driver 57. The clamp driver 41 is constituted by springs.

Moreover, the pin 11, the shoulder 12, and the clamp structure 13 are driven by the advance-retreat driver 53 constituted by a pin driver 531 and a shoulder driver 532, to advance and retreat in the upper-lower direction.

The pin 11 is formed in a columnar shape. Although not shown in FIG. 1 in detail, the pin 11 is supported by the rotary tool fixture 521. The pin 11 may be supported by the rotary tool fixture 521 through a linear motion bearing (not shown).

Moreover, the pin 11 is rotated by the rotary driver 57 about an axis Xr (rotation axis) that coincides with a center axis of the pin 11. Furthermore, the pin 11 can advance and retreat by the pin driver 531 in a direction indicated by an arrow PI, i.e., in a direction along the axis Xr (in the upper-lower direction in FIG. 1). The pin driver 531 may apply pressure to the pin 11. For example, a mechanism that utilizes gas pressure, hydraulic pressure, a servomotor, or the like may be suitably used.

The shoulder 12 is formed in a cylindrical shape including a hollow and is supported by the rotary tool fixture 521. The pin 11 is inserted into the hollow of the shoulder 12. In other words, the shoulder 12 is arranged so as to surround an outer peripheral surface of the pin 11.

Moreover, the shoulder 12 is rotated by the rotary driver 57 about the same axis Xr as the pin 11. Furthermore, the shoulder can advance and retreat by the shoulder driver 532 in a direction indicated by an arrow P2, i.e., in the direction along the axis Xr. The shoulder driver 532 may apply pressure to the shoulder 12. For example, a mechanism that utilizes gas pressure, hydraulic pressure, a servomotor, or the like may be suitably used.

Furthermore, first grooves 21 are formed on an outer peripheral surface of a tip end portion (lower end portion) of the shoulder 12 so as to extend from a tip end surface 12a (tip end of the shoulder 12) (see FIGS. 1 and 2). Herein, the first grooves 21 are formed so as to extend in the direction along the axis Xr. However, the first grooves 21 are not limited to this and may be formed so as to extend in an oblique direction to the axis Xr. Moreover, herein, the first grooves 21 are provided at four positions. However, the present embodiment is not limited to this. The first groove 21 may be provided at one position, or the first grooves 21 may be provided at plural positions (for example, two, six, or eight positions).

Herein, the tip ends of the first grooves 21 coincide with the tip end of the shoulder 12. However, the present embodiment is not limited to this. The tip ends of the first grooves 21 may be located at a base end side (upper side) of the tip end of the shoulder 12.

A length of each first groove 21 in a width direction (circumferential direction of the shoulder 12) may be 0.3 mm or more or 0.5 mm or more in order to improve welding strength of a welded portion of the welded workpiece 60. Moreover, the length of each first groove 21 in the width direction (circumferential direction of the shoulder 12) may be 1.5 mm or less or 1.3 mm or less in order to reduce a welding time of the welded portion of the welded workpiece 60.

Moreover, a depth of the first groove 21 (length in a radial direction of the shoulder 12) may be 0.1 mm or more or 0.2 mm or more in order to improve the welding strength of the welded portion of the welded workpiece 60. Moreover, the depth of the first groove 21 may be 0.3 mm or less or 0.5 mm or less in order to reduce the welding time of the welded portion of the welded workpiece 60.

Furthermore, a length of each first groove 21 in the direction along the axis Xr may be 2.0 mm or less or 1.8 mm or less in order to improve the welding strength of the welded portion of the welded workpiece 60. Moreover, the length of each first groove 21 in the direction along the axis Xr may be 0.7 mm or more or 1.2 mm or more in order to reduce the welding time of the welded portion of the welded workpiece 60.

In the present embodiment, the pin 11 and the shoulder 12 are supported by the rotary tool fixture 521 and are integrally rotated by the rotary driver 57 about the axis Xr. Moreover, the pin 11 can advance and retreat by the pin driver 531 in the direction along the axis Xr, and the shoulder 12 can advance and retreat by the shoulder driver 532 in the direction along the axis Xr.

In Embodiment 1, the pin 11 can independently advance and retreat, and in addition, can advance and retreat in accordance with the advancing and retreating of the shoulder 12. However, the pin 11 and the shoulder 12 may individually advance and retreat.

As with the shoulder 12, the clamp structure 13 is formed in a cylindrical shape including a hollow. The clamp structure 13 is disposed such that a center axis of the clamp structure 13 coincides with the axis Xr. The shoulder 12 is inserted into the hollow of the clamp structure 13.

To be specific, the cylindrical shoulder 12 is arranged so as to surround the outer peripheral surface of the pin 11, and the cylindrical clamp structure 13 is arranged so as to surround an outer peripheral surface of the shoulder 12. In other words, the clamp structure 13, the shoulder 12, and the pin 11 constitute a coaxial nested structure.

Moreover, the clamp structure 13 presses one surface (front surface) of the welded workpiece 60. As described above, in Embodiment 1, the clamp structure 13 is supported by the clamp fixture 522 through the clamp driver 41. The clamp driver 41 biases the clamp structure 13 toward the backing structure 56. Then, the clamp structure 13 (and the clamp driver 41 and the clamp fixture 522) can advance and retreat by the shoulder driver 532 in a direction indicated by an arrow P3 (which is the same as the direction indicated by the arrow P1 and the direction indicated by the arrow P2).

In Embodiment 1, the clamp driver 41 is constituted by springs. However, the present embodiment is not limited to this. The clamp driver 41 may apply biasing force or pressure to the clamp structure 13. For example, a mechanism that utilizes gas pressure, hydraulic pressure, a servomotor, or the like may be suitably used.

The pin 11, the shoulder 12, and the clamp structure 13 respectively include a tip end surface 11a, the tip end surface 12a, and a tip end surface 13a. Moreover, the pin 11, the shoulder 12, and the clamp structure 13 advance and retreat by the advance-retreat driver 53 to bring the tip end surface 11a, the tip end surface 12a, and the tip end surface 13a into contact with the front surface of the welded workpiece 60 (the welded portion of the welded workpiece 60) and press the welded workpiece 60.

In Embodiment 1, the backing structure 56 supports the welded workpiece 60 having a flat plate shape such that a flat surface (supporting surface 56a) of the backing structure 56 contacts a back surface of the welded workpiece 60. The configuration of the backing structure 56 is not especially limited as long as the backing structure 56 can appropriately support the welded workpiece 60 such that the friction stir spot welding is performed. For example, the backing structures 56 of various shapes may be additionally prepared, and the backing structure 56 may be detachable from the backing support 55 and replaceable in accordance with the types of the welded workpieces 60.

Specific configurations of the pin 11, the shoulder 12, the tool fixture 52, the advance-retreat driver 53, the clamp structure 13, the backing support 55, and the rotary driver 57 in Embodiment 1 are not limited to the above-described configurations, and configurations widely known in the field of the friction stir welding may be suitably used. For example, the tool fixture 52 may be supported by the backing support 55 through a linear motion bearing (not shown). Moreover, each of the pin driver 531 and the shoulder driver 532 may be constituted by a motor, a gear mechanism, and the like known in the field of the friction stir welding.

Moreover, in Embodiment 1, the backing support 55 is constituted by the C-shaped gun but is not limited to this. The backing support 55 may have any configuration as long as: the backing support 55 can support the pin 11, the shoulder 12, and the clamp structure 13 such that the pin 11, the shoulder 12, and the clamp structure 13 can advance and retreat; and the backing support 55 can support the backing structure 56 at a position opposed to the pin 11, the shoulder 12, and the clamp structure 13.

Furthermore, the friction stir spot welding apparatus 50 according to Embodiment 1 is disposed at a friction stir spot welding robot system (not shown). Specifically, the backing support 55 is attached to a tip end of an arm of the robot system. Therefore, the backing support 55 can be regarded as being included in the friction stir spot welding robot system. A specific configuration of the friction stir spot welding robot system including the backing support 55 and the arm is not especially limited, and apparatuses, such as an articulated robot, known in the field of the friction stir welding can be suitably used.

The present embodiment is not limited to a case where the friction stir spot welding apparatus 50 (including the backing support 55) is applied to the friction stir spot welding robot system. The friction stir spot welding apparatus 50 (including the backing support 55) is suitably applicable to known processing apparatuses, such as NC machining apparatuses, large C-shaped frames, and automatic riveters.

Moreover, the friction stir spot welding apparatus 50 according to Embodiment 1 may be configured such that two or more robots make the backing structure 56 and portions of the friction stir spot welding apparatus 50 other then the backing structure 56 face each other. Furthermore, as long as the friction stir spot welding apparatus 50 can stably perform the friction stir spot welding with respect to the welded workpiece 60, the welded workpiece 60 may be of a handy type, or a robot may be used as a positioner for the welded workpiece 60.

## Control Configuration of Friction Stir Spot Welding Apparatus

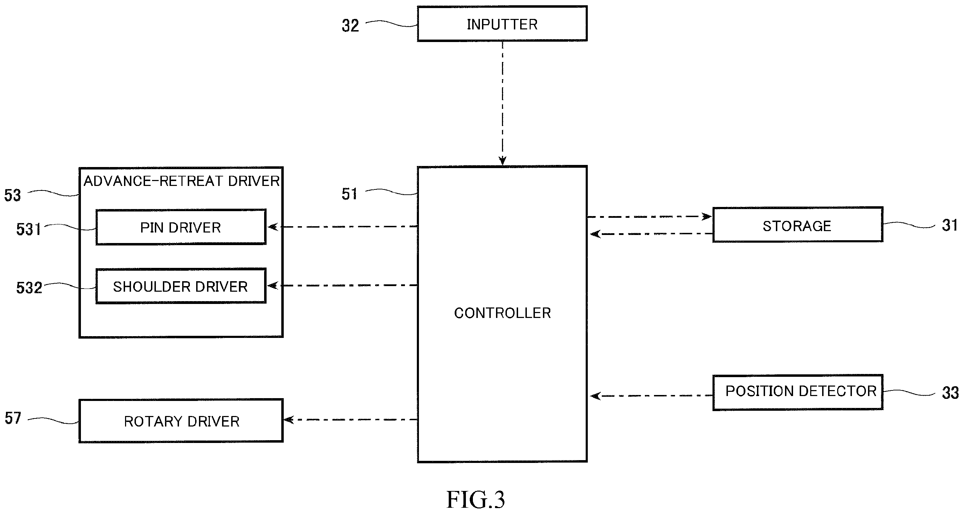

Next, a control configuration of the friction stir spot welding apparatus 50 according to Embodiment 1 will be specifically described with reference to FIG. 3.

FIG. 3 is a block diagram schematically showing the control configuration of the friction stir spot welding apparatus shown in FIG. 1.

As shown in FIG. 3, the friction stir spot welding apparatus 50 includes a controller 51, a storage 31, an inputter 32, and a position detector 33.

The controller 51 controls respective structures (respective devices) constituting the friction stir spot welding apparatus 50. Specifically, the controller 51 reads and executes software, such as a basic program, stored in the storage to control the pin driver 531 and shoulder driver 532 of the advance-retreat driver 53 and the rotary driver 57.

With this, switching between advancing and retreating of the pin 11 and the shoulder 12, control of the positions of a tip end of the pin 11 and a tip end of the shoulder 12 during advancing or retreating, movement speeds of the pin 11 and the shoulder 12, movement directions of the pin 11 and the shoulder 12, and the like can be controlled. Moreover, pressing forces applied to the welded workpiece 60 from the pin 11, the shoulder 12, and the clamp structure 13 can be controlled. Furthermore, rotational frequencies of the pin 11 and the shoulder 12 can be controlled.

The controller 51 may be constituted by a single controller 51 which performs centralized control or may be constituted by controllers 51 which cooperate to perform distributed control. Moreover, the controller 51 may be constituted by a microcomputer or may be constituted by an MPU, a PLC (Programmable Logic Controller), a logic circuit, or the like.

The storage 31 stores a basic program and various data such that the basic program and various data are readable. The storage 31 is constituted by a known memory, a storage apparatus such as a hard disk, or the like. The storage 31 does not have to be a single storage and may be constituted as storage apparatuses (for example, a random access memory and a hard disc drive). When the controller 51 and the like are constituted by a microcomputer, at least part of the storage 31 may be constituted as an internal memory of the microcomputer or may be constituted as an independent memory.

Needless to say, the storage 31 stores data, and the data may be read by a device other than the controller 51, and the controller 51 and the like may write data in the storage 31.

The inputter 32 inputs, to the controller 51, various parameters regarding the control of the friction stir spot welding, other data, and the like. The inputter 32 is constituted by a known input device, such as a keyboard, a touch panel, or a button switch group. In Embodiment 1, at least data of welding conditions of the welded workpiece 60, such as the thickness, material, and the like of the welded workpiece 60, can be input by the inputter 32.

The position detector 33 detects positional information of the tip end portion (tip end surface 12a) of the shoulder 12 and outputs the detected positional information to the controller 51. A LVDT, an encoder, or the like may be used as the position detector 33.

**Operation and Operational Advantage of Friction Stir Spot Welding Apparatus**

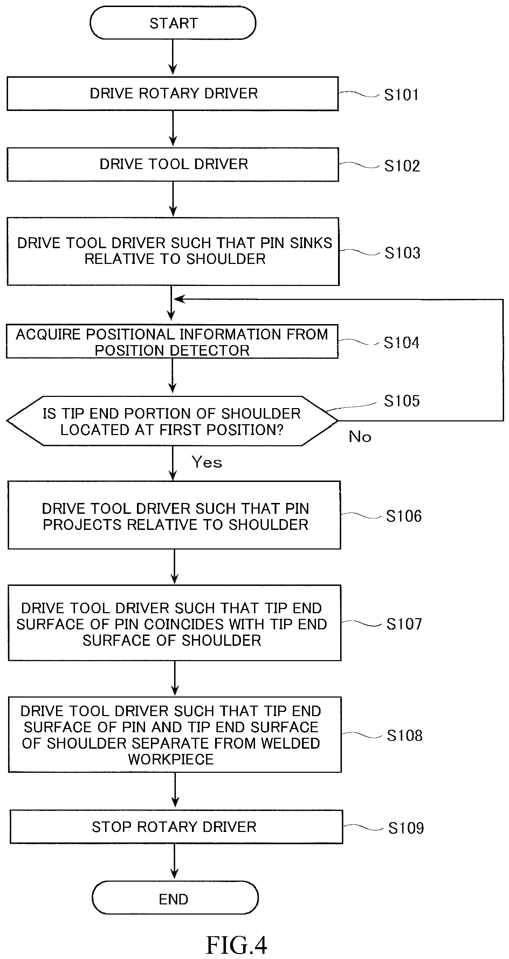

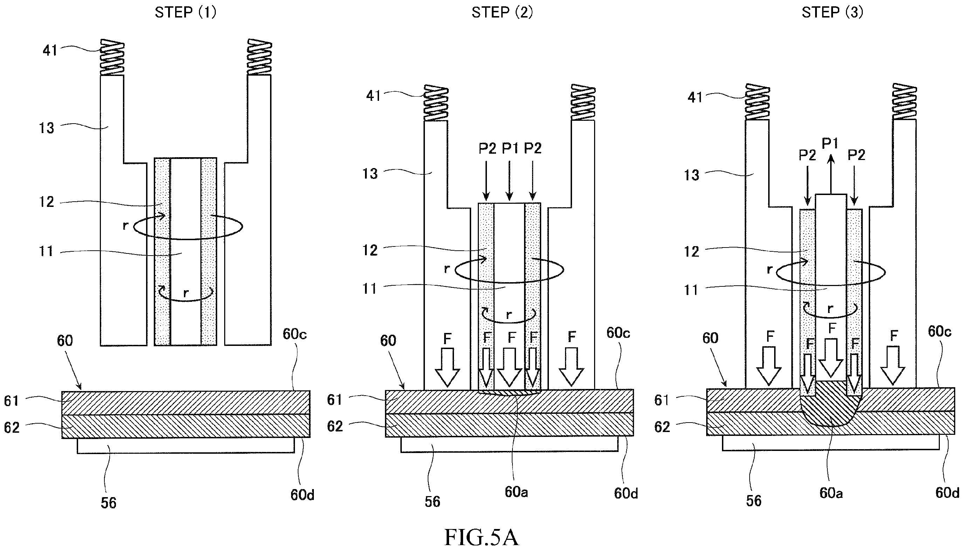

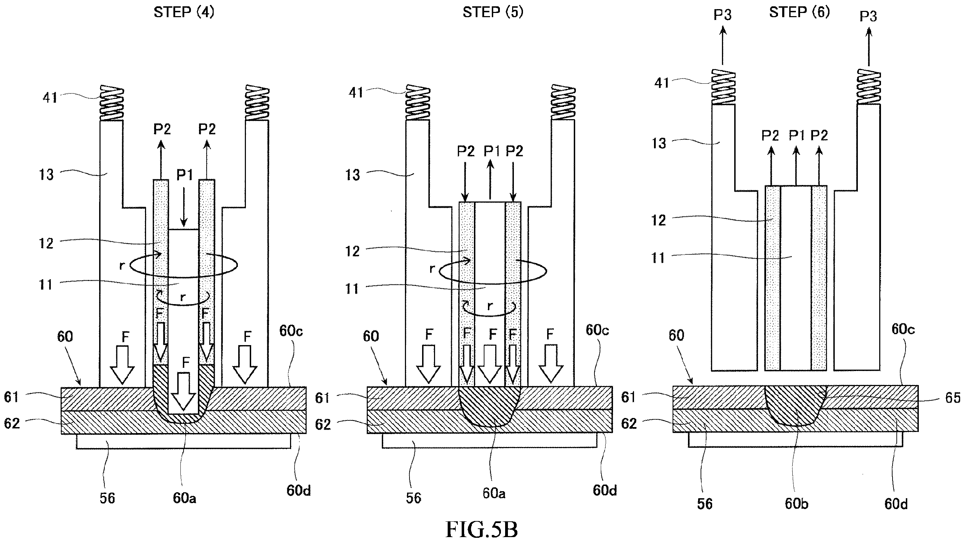

Next, the operation of the friction stir spot welding apparatus 50 according to Embodiment 1 will be specifically described with reference to FIGS. 4, 5A, and 5B. The following operation is executed in such a manner that the controller 51 reads a program stored in the storage 31.

FIG. 4 is a flow chart showing one example of the operation of the friction stir spot welding apparatus according to Embodiment 1. Each of FIGS. 5A and 5B is a process diagram schematically showing one example of steps of the friction stir spot welding performed by the friction stir spot welding apparatus shown in FIG. 1.

Each of FIGS. 5A and 5B shows an example in which: a plate-shaped first workpiece 61 and a plate-shaped second workpiece 62 are used as the welded workpiece 60; and these workpieces 61 and 62 are laminated on each other and coupled to each other by spot welding. The first workpiece 61 and the second workpiece 62 may be made of metal (for example, aluminum or steel).

Moreover, in Embodiment 1, the welded workpiece 60 is constituted by the plate-shaped first workpiece 61 and the plate-shaped second workpiece 62. However, the present embodiment is not limited to this, and the welded workpiece 60 (the first workpiece 61 and the second workpiece 62) may have any shape, and for example, may have a rectangular solid shape or a circular-arc shape.

Moreover, in FIGS. 5A and 5B, part of the double-acting friction welding apparatus is not shown. Arrows r indicate the rotational directions of the pin 11 and the shoulder 12, and block arrows F indicate directions of forces applied to the first workpiece 61 and the second workpiece 62.

Although forces are applied to the first workpiece 61 and the second workpiece 62 also from the backing structure 56, such forces are not shown in FIGS. 5A and 5B for convenience of explanation. The shoulder 12 is shown by cross hatching to clearly distinguish between the pin 11 and the clamp structure 13.

First, a worker (operator) places the welded workpiece 60 on the supporting surface 56a of the backing structure 56. Next, the worker manipulates the inputter 32 to input execution of welding of the welded workpiece 60 to the controller 51. A robot may place the welded workpiece 60 on the supporting surface 56a of the backing structure 56.

Then, as shown in FIG. 4, the controller 51 drives the rotary driver 57 to rotate the pin 11 and the shoulder 12 at a preset and predetermined first rotational frequency (for example, 200 to 3,000 rpm) (Step S101; see Step (1) in FIG. 5A).

Next, while driving the advance-retreat driver 53 (shoulder driver 532) to rotate the pin 11 and the shoulder 12, the controller 51 makes the pin 11, the shoulder 12, and the clamp structure 13 approach the welded workpiece 60 and brings the tip end surface 11a of the pin 11, the tip end surface 12a of the shoulder 12, and the tip end surface 13a of the clamp structure 13 (not shown in FIGS. 5A and 5B) into contact with the front surface 60c of the welded workpiece 60 (Step S102; see Step (2) in FIG. 5A).

At this time, the controller 51 controls the advance-retreat driver 53 (shoulder driver 532) such that the pin 11, the shoulder 12, and the clamp structure 13 press the welded workpiece 60 by a preset and predetermined first pressing force (for example, a predetermined value within a range of 3 kN to 10 kN) as a whole.

With this, the first workpiece 61 and the second workpiece 62 are sandwiched by the clamp structure 13 and the backing structure 56, and the clamp structure 13 is biased toward the front surface 60c of the welded workpiece 60 by the contraction of the clamp driver 41 to generate clamping force.

Moreover, in this state, since the pin 11 and the shoulder 12 do not advance or retreat, the front surface 60c of the welded workpiece 60 is subjected to "preheating." With this, a constituent material at a contact region of the first workpiece 61 is softened by heat generated by friction, and thus, a plastically flowing portion 60a is generated in the vicinity of the front surface 60c of the welded workpiece 60.

Next, the controller 51 drives the advance-retreat driver 53 such that the tip end surface 11a of the pin 11 sinks relative to the tip end surface 12a of the shoulder 12 (Step S103). At this time, the controller 51 may drive the advance-retreat driver 53 (pin driver 531) such that the pin 11 separates from the welded workpiece 60. Moreover, the controller 51 may drive the advance-retreat driver 53 (shoulder driver 532) such that the shoulder 12 is pressed in the welded workpiece 60.

Next, the controller 51 acquires the positional information of the tip end portion of the shoulder 12 from the position detector 33 (Step S104). Then, the controller 51 determines whether or not the positional information of the tip end portion of the shoulder 12 acquired in Step S104 has reached a preset and predetermined first position (Step S105).

The first position may be set in advance by experiments or the like. When a surface of the first workpiece 61 (the front surface 60c of the welded workpiece 60) is regarded as 0%, and a surface of the second workpiece 62 which surface contacts the supporting surface 56a is regarded as 100%, the first position is set arbitrarily within a range of more than 0% and less than 100%. To improve welding strength, the first position is preferably located close to the surface of the second workpiece 62 which surface contacts the supporting surface 56a. The first position may be 25% or more, 50% or more, 75% or more, 80% or more, 90% or more, or 95% or more.

With this, a softened part of the welded workpiece 60 extends from the first workpiece 61 at the upper side to the second workpiece 62 at the lower side, and the volume of the plastically flowing portion 60a increases. Moreover, a softened material of the plastically flowing portion 60a is pushed away by the shoulder 12 to flow from a position right under the shoulder 12 to a position right under the pin 11. Therefore, the pin 11 retreats and moves upward relative to the shoulder 12 (see Step (3) in FIG. 5A).

When the controller 51 determines that the positional information of the tip end portion of the shoulder 12 acquired in Step S104 has not yet reached the first position (No in Step S105), the controller 51 returns to Step S104. The controller 51 repeatedly performs Steps S104 and S105 until the controller 51 determines that the positional information of the tip end portion of the shoulder 12 acquired in Step S104 has reached the first position.

In contrast, when the controller 51 determines that the positional information of the tip end portion of the shoulder 12 acquired in Step S104 has reached the first position (Yes in Step S105), the controller 51 performs Step S106.

In Step S106, the controller 51 drives the advance-retreat driver 53 (pin driver 531) such that the pin 11 advances toward the welded workpiece 60, or the controller 51 drives the advance-retreat driver 53 (shoulder driver 532) such that the shoulder 12 separates from the welded workpiece 60.

With this, the pin 11 gradually advances toward the first workpiece 61, and the shoulder 12 retreats from the first workpiece 61 (see Step (4) in FIG. 5B). At this time, the softened part of the plastically flowing portion 60a flows from the position right under the pin 11 to the position right under the shoulder 12 (to a recess generated by press-in of the shoulder 12).

The controller 51 may control the advance-retreat driver 53 such that the tip end surface 11a of the pin 11 is located at the first position. Moreover, the controller 51 may control the advance-retreat driver 53 such that the tip end surface 11a of the pin 11 reaches an inside of the second workpiece 62 or may control the advance-retreat driver 53 such that the tip end surface 11a of the pin 11 is located inside the first workpiece 61.

Moreover, it is preferable that the controller 51 control the advance-retreat driver 53 in Step S103 and/or Step S106 so as to reduce an absolute value of a tool average position Tx defined by Formula (I) below.

$$Ap \cdot Pp + As \cdot Ps = Tx \dots (I)$$

In Formula (I), Ap denotes an area of the tip end surface of the pin 11, As denotes an area of the tip end surface of the shoulder 12, Pp denotes a press-in depth of the pin 11, and Ps denotes a press-in depth of the shoulder 12. It is more preferable that the controller 51 control the advance-retreat driver 53 such that the tool average position Tx becomes zero. Since specific control of reducing the absolute value of the tool average position Tx is disclosed in PTL 1 in detail, an explanation thereof is omitted herein.

Next, the controller 51 controls the advance-retreat driver 53 such that almost no level difference is generated between the tip end surface 11a of the pin 11 and the tip end surface 12a of the shoulder 12 (the tip end surface 11a of the pin 11 and the tip end surface 12a of the shoulder 12 are flush with each other) (Step S107; see Step (5) in FIG. 5B). With this, the front surface 60c of the welded workpiece 60 is shaped, and a substantially flat surface where recesses are not practically generated is obtained.

Next, the controller 51 drives the advance-retreat driver 53 such that the pin 11, the shoulder 12, and the clamp structure 13 separate from the welded workpiece 60 (Step S108). Then, the controller 51 controls the rotary driver 57 to stop the rotation of the pin 11 and the shoulder 12 (Step S109; see Step (6) in FIG. 5B) and terminates the friction stir spot welding (step of welding the welded workpiece 60).

With this, since the rotation (and pressing) of the pin 11 and the shoulder 12 during the contact of the pin 11 and the shoulder 12 with the first workpiece 61 and the second workpiece 62 is not applied to the first workpiece 61 and the second workpiece 62, the plastic flow stops at the plastically flowing portion 60a spreading in both the first workpiece 61 and the second workpiece 62, and the plastically flowing portion 60a becomes a welded portion 60b.

In the friction stir spot welding apparatus 50 according to Embodiment 1 configured as above, the first grooves 21 are formed on the outer peripheral surface of the tip end portion of the shoulder 12 so as to extend from the tip end surface 12a of the shoulder 12. With this, stirring of the first workpiece 61 and/or the second workpiece 62 is promoted, and this can reduce the welding time.

Moreover, since the first grooves 21 are formed on the outer peripheral surface of the tip end portion of the shoulder 12, as shown in Test Examples below, the welding strength is made higher than the welding strength of the welded workpiece welded by using the conventional shoulder 12 not including the first grooves 21.

**Modified Example 1**

Next, Modified Example of the friction stir spot welding apparatus according to Embodiment 1 will be described.

The friction stir spot welding apparatus according to Modified Example 1 of Embodiment 1 is configured such that in the friction stir spot welding apparatus according to Embodiment 1, second grooves are formed on the tip end surface of the shoulder so as to extend in the radial direction of the shoulder.

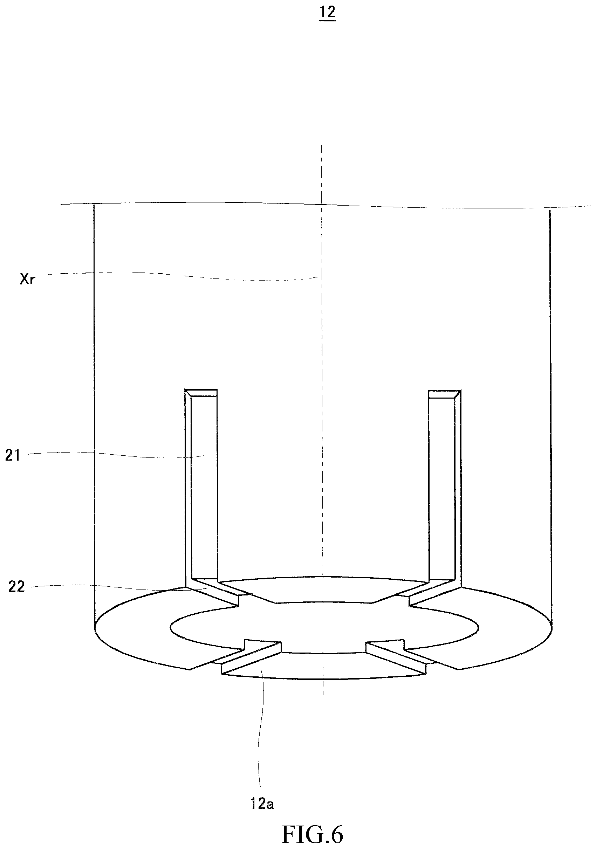

Hereinafter, the friction stir spot welding apparatus according to Modified Example 1 of Embodiment 1 will be described in detail with reference to FIG. 6.

FIG. 6 is a perspective view schematically showing a major component (the tip end portion of the shoulder) of the friction stir spot welding apparatus according to Modified Example 1 of Embodiment 1.

As shown in FIG. 6, the friction stir spot welding apparatus according to Modified Example 1 of Embodiment 1 is the same in basic configuration as the friction stir spot welding apparatus 50 according to Embodiment 1 but is different from the friction stir spot welding apparatus 50 according to Embodiment 1 in that in addition to the first grooves 21, second grooves 22 are provided on the tip end surface 12a of the shoulder 12.

Herein, each of the second grooves 22 is formed so as to extend in the radial direction passing through a center (center axis) of the shoulder 12. However, the present embodiment is not limited to this. Each of the second grooves 22 may be formed so as to extend in an oblique direction to the radial direction. Moreover, herein, the second grooves 22 are provided at four positions. However, the present embodiment is not limited to this. The second groove 22 may be provided at one position, or the second grooves 22 may be provided at plural positions (for example, two, six, or eight positions).

Moreover, the second grooves 22 are provided so as to communicate with the first grooves 21. However, the present embodiment is not limited to this. The second grooves 22 may be provided so as not to communicate with the first grooves 21.

**Embodiment 2**

A friction stir spot welding apparatus according to Embodiment 2 includes: a pin that is columnar; a shoulder that is cylindrical, the pin being within the shoulder; a rotary driver that rotates the pin and the shoulder about an axis that coincides with a center axis of the pin; and an advance-retreat driver that advances and retreats the pin and the shoulder along the axis. A second groove is formed on a tip end surface of the shoulder so as to extend in a radial direction of the shoulder.

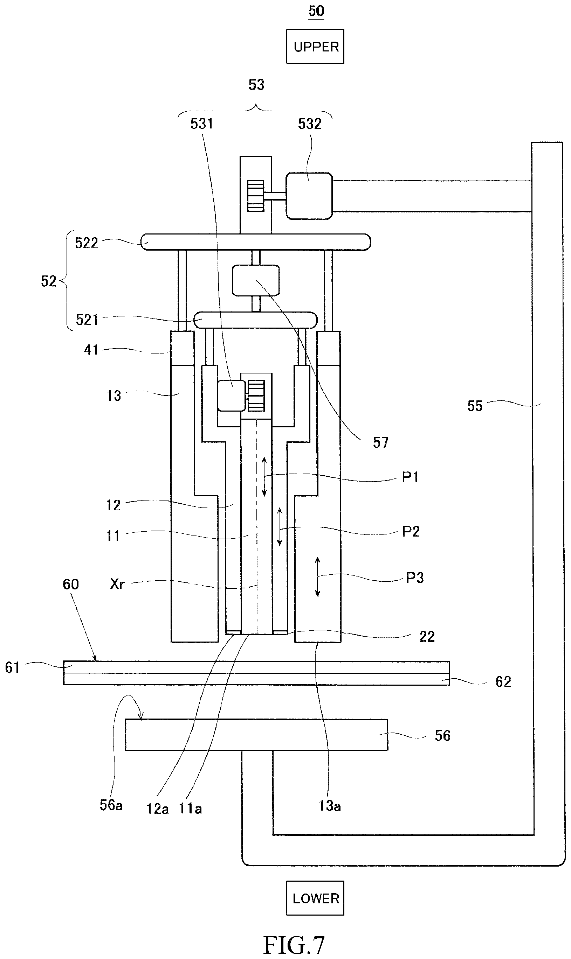

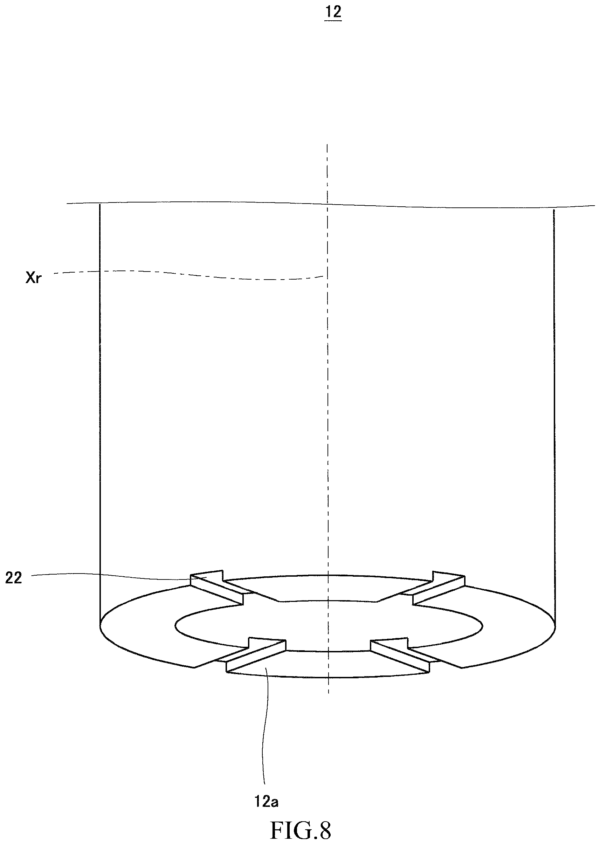

Hereinafter, one example of the friction stir spot welding apparatus according to Embodiment 2 will be described in detail with reference to FIGS. 7 and 8. Since the operation of the friction stir spot welding apparatus according to Embodiment 2 is basically the same as the operation of the friction stir spot welding apparatus according to Embodiment 1, a detailed explanation thereof is omitted.

**Configuration of Friction Stir Spot Welding Apparatus**

FIG. 7 is a schematic diagram showing a schematic configuration of the friction stir spot welding apparatus according to Embodiment 2. FIG. 8 is a perspective view schematically showing the tip end portion of the shoulder of the friction stir spot welding apparatus shown in FIG. 7. An upper-lower direction in FIG. 7 is shown as an upper-lower direction of the friction stir spot welding apparatus.

As shown in FIGS. 7 and 8, the friction stir spot welding apparatus 50 according to Embodiment 2 is the same in basic configuration as the friction stir spot welding apparatus 50 according to Embodiment 1 but is different from the friction stir spot welding apparatus 50 according to Embodiment 1 in that instead of the first grooves 21, the second grooves 22 are provided on the tip end surface 12a of the shoulder 12.

Herein, each of the second grooves 22 is formed so as to extend in the radial direction passing through the center (center axis) of the shoulder 12. However, the present embodiment is not limited to this. Each of the second grooves 22 may be formed so as to extend in an oblique direction to the radial direction. Moreover, herein, the second grooves 22 are provided at four positions. However, the present embodiment is not limited to this. The second groove 22 may be provided at one position, or the second grooves 22 may be provided at plural positions (for example, two, six, or eight positions).

The friction stir spot welding apparatus 50 according to Embodiment 2 configured as above archives the same operational advantages as the friction stir spot welding apparatus 50 according to Embodiment 1.

The second grooves 22 of the friction stir spot welding apparatus 50 according to Embodiment 2 may be provided at the shoulder 12 of the friction stir spot welding apparatus 50 according to Embodiment 1. To be specific, the first grooves 21 may be provided on the outer peripheral surface of the tip end portion of the shoulder 12, and the second grooves 22 may be provided on the tip end surface 12a of the shoulder 12.

## Test Examples

Next, Test Examples of the friction stir spot welding apparatuses 50 according to Embodiments 1 and 2 will be described.

### Test Example 1

In the friction stir spot welding apparatus 50 of Test Example 1, the first grooves 21 were provided on the outer peripheral surface of the tip end portion of the shoulder 12. Specifically, the first grooves 21 were provided at four positions on the outer peripheral surface of the tip end portion of the shoulder 12, and the length of each first groove 21 in the width direction (circumferential direction of the shoulder 12) was 1.5 mm. Moreover, the depth (length in the radial direction of the shoulder 12) of each first groove 21 was 0.3 mm, and the length of each first groove 21 in the direction along the axis Xr was 2.0 mm.

### Test Example 2

In the friction stir spot welding apparatus 50 of Test Example 2, the first grooves 21 were provided on the outer peripheral surface of the tip end portion of the shoulder 12. Specifically, the first grooves 21 were provided at four positions on the outer peripheral surface of the tip end portion of the shoulder 12, and the length of each first groove 21 in the width direction was 0.5 mm. Moreover, the depth of each first groove 21 was 0.2 mm, and the length of each first groove 21 in the direction along the axis Xr was 1.8 mm.

### Test Example 3

In the friction stir spot welding apparatus 50 of Test Example 3, the first grooves 21 were provided on the outer peripheral surface of the tip end portion of the shoulder 12. Specifically, the first grooves 21 were provided at eight positions on the outer peripheral surface of the tip end portion of the shoulder 12, and the length of each first groove 21 in the width direction was 0.5 mm. Moreover, the depth of each first groove 21 was 0.2 mm, and the length of each first groove 21 in the direction along the axis Xr was 1.8 mm.

### Test Example 4

In the friction stir spot welding apparatus 50 of Test Example 4, second grooves 221 were provided on the tip end surface 12a of the shoulder 12. Specifically, the second grooves 22 were provided at four positions on the tip end surface 12a of the shoulder 12. Moreover, the length of each second groove 22 in the width direction (circumferential direction of the shoulder 12) was 1.73 mm, and the depth (length in the direction along the axis Xr) of each second groove 22 was 0.5 mm.

### Comparative Example

In the friction stir spot welding apparatus 50 of Comparative Example, the shoulder 12 was the same in configuration as the conventional shoulder 12 and did not include the first grooves 21 and the second grooves 22.

### Test Results

An aluminum plate having a thickness of 2.0 mm was used as each of the first and second workpieces 61 and 62. The first and second workpieces 61 and 62 were subjected to the friction stir spot welding by each of the friction stir spot welding apparatuses 50 according to Comparative Example and Test Examples 1 to 4, and the welding time was measured.

The welding time was measured as a period of time from when the tip end surface 11a of the pin 11 and the tip end surface 12a of the shoulder 12 were brought into contact with the front surface 60c of the welded workpiece 60 until when the tip end surface 11a of the pin 11 and the tip end surface 12a of the shoulder 12 were separated from the front surface 60c of the welded workpiece 60.

Moreover, a cross tension test (JIS Z 3137) was performed by using the welded workpieces 60 subjected to the friction stir spot welding.

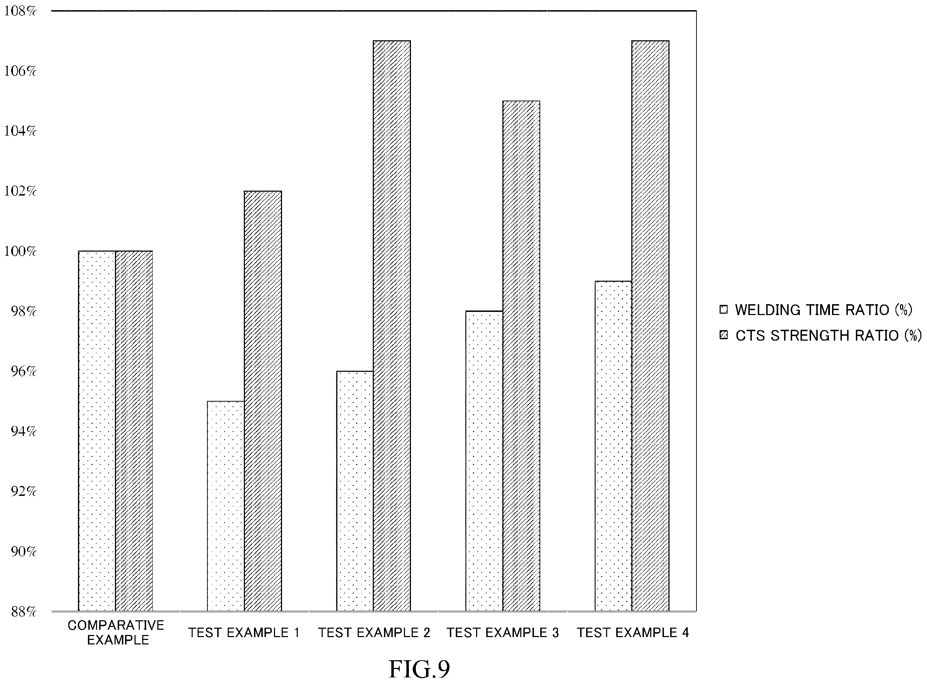

FIG. 9 is a graph showing the welding times as the results of the friction stir spot welding performed by using the friction stir spot welding apparatuses of Comparative Example and Test Examples 1 to 4 and also showing the results of the cross tension test. In FIG. 9, each of the welding time and the result of the cross tension test when the friction stir spot welding apparatus 50 according to Comparative Example was used is shown as 100%, and based on this, the welding times and the results of the cross tension test when the friction stir spot welding apparatuses 50 of Test Examples 1 to 4 were used to perform the friction stir spot welding are shown.

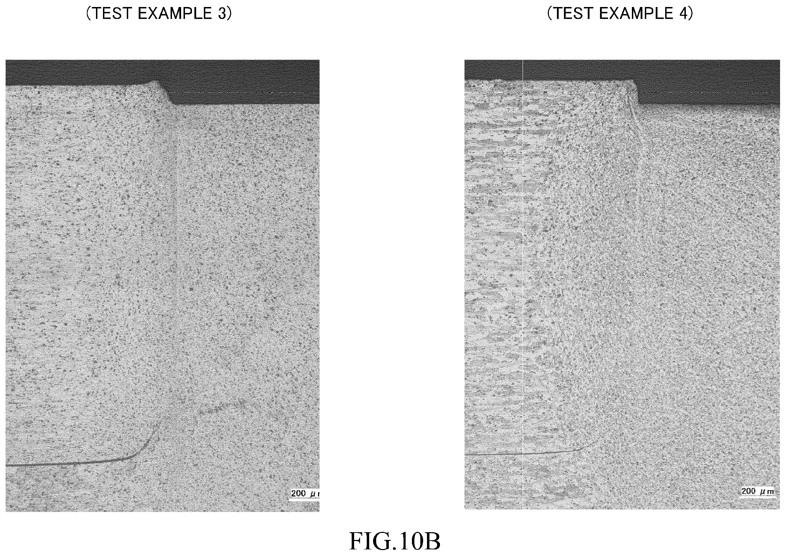

FIGS. 10A and 10B show pictures of sections of the welded workpieces subjected to the friction stir spot welding by using the friction stir spot welding apparatuses of Comparative Example and Test Examples 1 to 4.

As shown in FIG. 9, when the welded workpiece 60 was subjected to the friction stir spot welding by using each of the friction stir spot welding apparatuses 50 of Test Examples 1 to 4, the welding time was shorter, and the welding strength was higher than when the welded workpiece 60 was subjected to the friction stir spot welding by using the friction stir spot welding apparatus 50 of Comparative Example.

Moreover, as shown in FIGS. 10A and 10B, according to the friction stir spot welding apparatus 50 of Comparative Example, an interface was formed between an inner wall surface 65 (see Step (6) in FIG. 5B) of the welded workpiece 60 (first workpiece 61) and a portion (welded portion 60b) backfilled by the softened material, the inner wall surface 65 forming a recess generated by the press-in of the shoulder 12. On the other hand, according to the friction stir spot welding apparatuses 50 of Test Examples 1 to 4, the formation of the interface between the inner wall surface 65 and the welded portion 60b was suppressed more than the friction stir spot welding apparatus 50 of Comparative Example.

These results indicate that: according to the friction stir spot welding apparatuses 50 of Test Examples 1 to 4, since the formation of the interface between the inner wall surface 65 and the welded portion 60b is suppressed, the welding was adequately performed in a region in the vicinity of the interface; and therefore, the welding strength improves.

**Embodiment 3**

A friction stir spot welding apparatus according to Embodiment 3 is a friction stir spot welding apparatus that performs friction stir spot welding with respect to a welded workpiece including a first workpiece and a second workpiece. The friction stir spot welding apparatus includes: a pin; a shoulder that is hollow, the pin being within the shoulder; a rotary driver that rotates the pin and the shoulder about an axis extending in a longitudinal direction of the pin and a longitudinal direction of the shoulder; and an advance-retreat driver that advances and retreats the pin and the shoulder along the axis. The shoulder is configured such that when the shoulder advances while rotating in the welded workpiece, a material softened by plastic flow flows in an advancing direction of the shoulder.

Herein, the advancing direction of the shoulder denotes a direction in which the shoulder advances toward the welded workpiece. A retreating direction of the shoulder is a direction in which the shoulder separates from the welded workpiece.

Moreover, in the friction stir spot welding apparatus according to Embodiment 3, the shoulder may be configured such that a hook of the welded workpiece is formed so as to be directed in the advancing direction of the shoulder.

Moreover, in the friction stir spot welding apparatus according to Embodiment 3, tensile strength of the first workpiece may be higher than that of the second workpiece, and the shoulder may be configured such that the hook of the welded workpiece is formed at the first workpiece which has not yet been subjected to the welding.

Herein, the tensile strength denotes strength measured based on JIS Z2241.

Moreover, in the friction stir spot welding apparatus according to Embodiment 3, a first groove may be formed on an outer peripheral surface of a tip end portion of the shoulder, and the first groove may be formed such that a front end thereof in a rotational direction of the shoulder is located closer to a base end of the shoulder than a rear end thereof in the rotational direction of the shoulder.

Moreover, in the friction stir spot welding apparatus according to Embodiment 3, a tip end portion of the first groove may be formed at a position away from a tip end of the shoulder toward a base end portion of the shoulder.

The welded workpiece according to Embodiment 3 may be a welded workpiece subjected to the friction stir spot welding by any of the friction stir spot welding apparatuses according to Embodiment 3.

Moreover, according to the welded workpiece of Embodiment 3, the tensile strength of the first workpiece may be higher than that of the second workpiece, and the hook may be formed at the first workpiece which has not yet been subjected to the welding.

Furthermore, the welded workpiece according to Embodiment 3 is a welded workpiece subjected to the friction stir spot welding by the friction stir spot welding apparatus and includes the first workpiece and the second workpiece, and the hook is formed in the first workpiece or the second workpiece.

The shoulder according to Embodiment 3 includes a recess and/or a projection on the outer peripheral surface thereof, each of the recess and the projection including such an inclined portion that a part thereof in the rotational direction of the shoulder is located closer to the base end of the shoulder than another part thereof in the rotational direction of the shoulder.

Hereinafter, the friction stir spot welding apparatus and the welded workpiece according to Embodiment 3 will be described in detail with reference to FIGS. 11 to 14B.

**Configuration of Friction Stir Spot Welding Apparatus**

FIG. 11 is a schematic diagram showing a schematic configuration of the friction stir spot welding apparatus according to Embodiment 3. FIG. 12 is a perspective view schematically showing the tip end portion of the shoulder of the friction stir spot welding apparatus shown in FIG. 11. An upper-lower direction in FIG. 11 is shown as an upper-lower direction of the friction stir spot welding apparatus.

As shown in FIGS. 11 and 12, the friction stir spot welding apparatus 50 according to Embodiment 3 is the same in basic configuration as the friction stir spot welding apparatus 50 according to Embodiment 1 but is different from the friction stir spot welding apparatus 50 according to Embodiment 1 regarding the shape of the shoulder 12. Since the control configuration of the friction stir spot welding apparatus 50 according to Embodiment 3 is the same as that of the friction stir spot welding apparatus 50 according to Embodiment 1, a detailed explanation thereof is omitted.

Specifically, the shoulder 12 is configured such that when the shoulder 12 advances while rotating in the welded workpiece 60, the material softened by the plastic flow flows in the advancing direction of the shoulder 12 (see FIGS. 13A and 14A). In other words, the shoulder 12 is configured such that a hook 66 is formed at the welded workpiece 60 so as to be directed in the advancing direction of the shoulder 12.

More specifically, the first grooves 21 formed on the outer peripheral surface of the tip end portion of the shoulder 12 are formed such that front end parts 21a thereof in the rotational direction of the shoulder 12 are located closer to the base end of the shoulder than rear end parts 21b thereof in the rotational direction of the shoulder 12. To be specific, the first grooves 21 are formed on the outer peripheral surface of the tip end portion of the shoulder 12 such that the front end parts 21a thereof are located closer to the base end of the shoulder 12, and the rear end parts 21b thereof are located closer to the tip end of the shoulder 12.

In Embodiment 3, the first grooves 21 are formed so as to cover the entire outer peripheral surface of the shoulder 12. However, the present embodiment is not limited to this. For example, one first groove 21 may be formed in a spiral shape so as to cover the entire outer peripheral surface of the shoulder 12. Moreover, instead of the first grooves 21, recesses and/or projections may be provided on the outer peripheral surface of the tip end portion of the shoulder 12 so as to be lined up on a straight line or a curved line.

**Operation and Operational Advantage of Friction Stir Spot Welding Apparatus**

Next, the operation of the friction stir spot welding apparatus 50 according to Embodiment 3 will be specifically described with reference to FIGS. 11 to 14B. The following operation is executed in such a manner that the controller 51 reads a program stored in the storage 31.

Each of FIGS. 13A and 13B is a process diagram schematically showing one example of steps of the friction stir spot welding performed by the friction stir spot welding apparatus shown in FIG. 11. Each of FIGS. 14A and 14B is a process diagram schematically showing another example of steps of the friction stir spot welding performed by the friction stir spot welding apparatus shown in FIG. 11.

Each of FIGS. 13A to 14B shows an example in which: the plate-shaped first workpiece 61 and the plate-shaped second workpiece 62 are used as the welded workpiece 60; and these workpieces 61 and 62 are laminated on each other and coupled to each other by spot welding. In FIGS. 13A and 13B, the first workpiece 61 and the second workpiece 62 are the same in thickness as each other, and the first workpiece 61 is placed on the backing structure 56. Moreover, in FIGS. 14A and 14B, the first workpiece 61 is higher in tensile strength than the second workpiece 62 and is placed on the backing structure 56.

Moreover, in FIGS. 13A to 14B, part of the friction stir spot welding apparatus 50 is not shown. Arrows r indicate the rotational directions of the pin 11 and the shoulder 12, and block arrows F indicate directions of forces applied to the first workpiece 61 and the second workpiece 62.

Although forces are applied to the first workpiece 61 and the second workpiece 62 also from the backing structure 56, such forces are not shown in FIGS. 13A to 14B for convenience of explanation. The shoulder 12 is shown by cross hatching to clearly distinguish between the pin 11 and the clamp structure 13.

First, a worker (operator) places the welded workpiece 60 on the supporting surface 56a of the backing structure 56. Next, the worker manipulates the inputter 32 to input execution of welding of the welded workpiece 60 to the controller 51. A robot may place the welded workpiece 60 on the supporting surface 56a of the backing structure 56.

Then, the controller 51 drives the rotary driver 57 to rotate the pin 11 and the shoulder 12 at a preset and predetermined first rotational frequency (for example, 200 to 3,000 rpm) (see Step (1) in each of FIGS. 13A and 14A).

Next, while driving the advance-retreat driver 53 (shoulder driver 532) to rotate the pin 11 and the shoulder 12, the controller 51 makes the pin 11, the shoulder 12, and the clamp structure 13 approach the welded workpiece 60 and brings the tip end surface 11a of the pin 11, the tip end surface 12a of the shoulder 12, and the tip end surface 13a of the clamp structure 13 (not shown in FIGS. 13A to 14B) into contact with the front surface 60c of the welded workpiece 60 (see Step (2) in each of FIGS. 13A and 14A).

At this time, the controller 51 controls the advance-retreat driver 53 (shoulder driver 532) such that the pin 11, the shoulder 12, and the clamp structure 13 press the welded workpiece 60 by a preset and predetermined first pressing force (for example, a predetermined value within a range of 3 kN to 10 kN) as a whole.

With this, the first workpiece 61 and the second workpiece 62 are sandwiched by the clamp structure 13 and the backing structure 56, and the clamp structure 13 is biased toward the front surface 60c of the welded workpiece 60 by the contraction of the clamp driver 41 to generate clamping force.

Moreover, in this state, since the pin 11 and the shoulder 12 do not advance or retreat, the front surface 60c of the welded workpiece 60 is subjected to "preheating." With this, a constituent material at a contact region of the welded workpiece 60 is softened by heat generated by friction, and thus, the plastically flowing portion 60a is generated in the vicinity of the front surface 60c of the welded workpiece 60.

Next, the controller 51 drives the advance-retreat driver 53 such that the tip end surface 11a of the pin 11 sinks relative to the tip end surface 12a of the shoulder 12. The controller 51 may drive the advance-retreat driver 53 (pin driver 531) such that the pin 11 separates from the welded workpiece 60. Moreover, the controller 51 may drive the advance-retreat driver 53 (shoulder driver 532) such that the shoulder 12 is pressed in the welded workpiece 60.

At this time, as shown in Step (3) of FIG. 13A, a softened part of the welded workpiece 60 extends from the first workpiece 61 to the second workpiece 62, and the volume of the plastically flowing portion 60a increases. Moreover, a softened material of the plastically flowing portion 60a is pushed away by the shoulder 12 to flow from a position right under the shoulder 12 to a position right under the pin 11. Therefore, the pin 11 retreats and moves upward relative to the shoulder 12. On this account, upward force F acts on the pin 11 in some cases.

Moreover, in Embodiment 3, the shoulder 12 is configured such that the material softened by the plastic flow flows in the advancing direction (lower direction) of the shoulder 12. With this, as shown in Step (3) in each of FIGS. 13A and 14A, the hook 66 is formed so as to be directed in the advancing direction of the shoulder 12. As shown in Step (3) of FIG. 14A, when the first workpiece 61 is higher in tensile strength than the second workpiece 62, the hook 66 is formed at the first workpiece 61 which has not yet been subjected to the welding.

Next, the controller 51 acquires the positional information of the tip end portion of the shoulder 12 from the position detector 33. Then, the controller 51 determines whether or not the positional information of the tip end portion of the shoulder 12 acquired in Step S104 has reached the preset and predetermined first position.

When the controller 51 determines that the positional information of the tip end portion of the shoulder 12 has reached the first position, the controller 51 drives the advance-retreat driver 53 (pin driver 531) such that the pin 11 advances toward the welded workpiece 60, or the controller 51 drives the advance-retreat driver 53 (shoulder driver 532) such that the shoulder 12 separates from the welded workpiece 60.

With this, the pin 11 gradually advances toward the welded workpiece 60, and the shoulder 12 retreats from the welded workpiece 60 (see Step (4) in each of FIGS. 13B and 14B). At this time, the softened part of the plastically flowing portion 60a flows from the position right under the pin 11 to the position right under the shoulder 12 (to a recess generated by press-in of the shoulder 12).

Next, the controller 51 controls the advance-retreat driver 53 such that almost no level difference is generated between the tip end surface 11a of the pin 11 and the tip end surface 12a of the shoulder 12 (the tip end surface 11a of the pin 11 and the tip end surface 12a of the shoulder 12 are flush with each other) (see Step (5) in each of FIGS. 13B and 14B). With this, the front surface 60c of the welded workpiece 60 is shaped, and a substantially flat surface where recesses are not practically generated is obtained.

Next, the controller 51 drives the advance-retreat driver 53 such that the pin 11, the shoulder 12, and the clamp structure 13 separate from the welded workpiece 60 (Step S108). Then, the controller 51 controls the rotary driver 57 to stop the rotation of the pin 11 and the shoulder 12 (see Step (6) in each of FIGS. 13B and 14B) and terminates the friction stir spot welding (step of welding the welded workpiece 60).

With this, since the rotation (and pressing) of the pin 11 and the shoulder 12 during the contact of the pin 11 and the shoulder 12 with the first workpiece 61 and the second workpiece 62 is not applied to the first workpiece 61 and the second workpiece 62, the plastic flow stops at the plastically flowing portion 60a spreading in both the first workpiece 61 and the second workpiece 62, and the plastically flowing portion 60a becomes the welded portion 60b.

In the friction stir spot welding apparatus 50 according to Embodiment 3 configured as above, the shoulder 12 is configured such that the material softened by the plastic flow flows in the advancing direction (lower direction) of the shoulder 12.

With this, the hook 66 is formed so as to be directed in the advancing direction of the shoulder 12. More specifically, when the pin 11 moves in the retreating direction, the hook 66 is slightly pulled in the retreating direction. However, since the hook 66 is deeply pushed inside in the advancing direction, the hook 66 is formed so as to be directed in the advancing direction of the shoulder 12 as a whole.

The direction of the hook 66 is determined based on the direction of the tip end portion of the hook 66. Therefore, when part of the hook 66 is directed in an upper direction, but the tip end portion of the hook is formed so as to be directed in the lower direction, it is determined that the hook 66 is formed so as to be directed in the lower direction.

Therefore, as shown in Test Examples below, the welding strength of the welded workpiece 60 is made higher than the welding strength of the welded workpiece welded by using the conventional friction stir spot welding apparatus.

Moreover, in the friction stir spot welding apparatus 50 according to Embodiment 3, the tip end portion of the first groove 21 is formed at a position away from the tip end surface of the shoulder 12 toward the base end portion of the shoulder 12. With this, since no corners are formed on the tip end surface of the shoulder 12, the tip end portion of the shoulder 12 hardly chips, and therefore, the life of the shoulder 12 improves.

The shoulder 12 may be configured such that when the shoulder 12 advances while rotating in the welded workpiece 60, the material softened by the plastic flow flows in the advancing direction of the shoulder 12. The shape of the shoulder 12 is not limited to the above shape. For example, suitable recesses and/or projections may be provided on the outer peripheral surface of the tip end portion of the shoulder 12.

In this case, each of the recesses and/or the projections may be formed so as to include such an inclined portion that a part (for example, the front end part 21a) thereof in the rotational direction of the shoulder 12 is located closer to the base end of the shoulder 12 than another part (for example, the rear end part 21b) thereof in the rotational direction of the shoulder 12. Moreover, the inclined portion may be formed in a linear shape, a curved shape, or a stair shape.

**Modified Example 1**

Next, Modified Example of the friction stir spot welding apparatus 50 according to Embodiment 3 will be described.

In the friction stir spot welding apparatus according to Modified Example 1 of Embodiment 3, the second grooves are formed on the tip end surface of the shoulder.

Moreover, in the friction stir spot welding apparatus according to Modified Example 1 of Embodiment 3, each second groove may be formed such that a bottom surface thereof is inclined.

Hereinafter, one example of the friction stir spot welding apparatus and the welded workpiece according to Modified Example 1 of Embodiment 3 will be described with reference to FIGS. 15 and 16.

FIG. 15 is a schematic diagram showing a schematic configuration of the friction stir spot welding apparatus according to Modified Example 1 of Embodiment 3. FIG. 16 is a perspective view schematically showing the tip end portion of the shoulder of the friction stir spot welding apparatus shown in FIG. 15. An upper-lower direction in FIG. 15 is shown as an upper-lower direction of the friction stir spot welding apparatus.

As shown in FIGS. 15 and 16, the friction stir spot welding apparatus 50 according to Modified Example 1 of Embodiment 3 is the same in basic configuration as the friction stir spot welding apparatus 50 according to Embodiment 3 but is different from the friction stir spot welding apparatus 50 according to Embodiment 3 in that the second grooves 22 are formed on the tip end surface 12a of the shoulder 12 so as to extend in the radial direction. Herein, the second grooves 22 are formed such that bottom surfaces 22a thereof are inclined.

Specifically, each of the bottom surfaces 22a is inclined such that a front end part 221 thereof in the rotational direction of the shoulder 12 is located closer to the base end of the shoulder 12 than a rear end part 222 thereof in the rotational direction of the shoulder 12.

With this, the material softened by the plastic flow is made to flow in the advancing direction (lower direction) of the shoulder 12. Therefore, the softened material is made to flow in the advancing direction (lower direction) of the shoulder 12 more than the friction stir spot welding apparatus 50 according to Embodiment 3. As shown in Test Examples described below, the welding strength of the welded workpiece 60 is made higher than the welding strength of the welded workpiece welded by using the friction stir spot welding apparatus 50 according to Embodiment 3.

**Embodiment 4**

A friction stir spot welding apparatus according to Embodiment 4 is a friction stir spot welding apparatus that performs friction stir spot welding with respect to a welded workpiece including a first workpiece and a second workpiece. The friction stir spot welding apparatus includes: a pin that is columnar; a shoulder that is cylindrical, the pin being within the shoulder; a rotary driver that rotates the pin and the shoulder about an axis that coincides with a center axis of the pin; and an advance-retreat driver that advances and retreats the pin and the shoulder along the axis. The shoulder is configured such that when the shoulder advances in the welded workpiece, a material softened by plastic flow flows in an advancing direction of the shoulder.

Moreover, in the friction stir spot welding apparatus according to Embodiment 4, the shoulder may be configured such that a hook of the welded workpiece is formed so as to be directed in the advancing direction of the shoulder.

Moreover, in the friction stir spot welding apparatus according to Embodiment 4, a second groove may be formed on a tip end surface of the shoulder so as to extend in a radial direction of the shoulder or a direction along a straight line segment joining two points on a circle of the tip end surface of the shoulder.

Moreover, in the friction stir spot welding apparatus according to Embodiment 4, the second groove may be formed such that a bottom surface thereof is inclined.

The welded workpiece according to Embodiment 4 may be a welded workpiece subjected to the friction stir spot welding by any one of the friction stir spot welding apparatuses according to Embodiment 4.

Moreover, in the welded workpiece according to Embodiment 4, tensile strength of the first workpiece may be higher than that of the second workpiece, and the hook may be formed at the first workpiece which has not yet been subjected to the welding.

Hereinafter, one example of the friction stir spot welding apparatus and the welded workpiece according to Embodiment 4 will be described with reference to FIGS. 17 and 18.

FIG. 17 is a schematic diagram showing a schematic configuration of the friction stir spot welding apparatus according to Embodiment 4. FIG. 18 is a perspective view schematically showing the tip end portion of the shoulder of the friction stir spot welding apparatus shown in FIG. 17. An upper-lower direction in FIG. 17 is shown as an upper-lower direction of the friction stir spot welding apparatus.

As shown FIGS. 17 and 18, the friction stir spot welding apparatus 50 according to Embodiment 4 is the same in basic configuration as the friction stir spot welding apparatus 50 according to Embodiment 3 but is different from the friction stir spot welding apparatus 50 according to Embodiment 3 in that instead of the first grooves 21, the second grooves 22 are formed on the tip end surface 12a of the shoulder 12 so as to extend in the radial direction. Herein, the second grooves 22 are formed such that the bottom surfaces 22a thereof are inclined.

Specifically, each of the bottom surfaces 22a is inclined such that the front end part 221 thereof in the rotational direction of the shoulder 12 is located closer to the base end of the shoulder 12 than the rear end part 222 thereof in the rotational direction of the shoulder 12.

With this, the material softened by the plastic flow is made to flow in the advancing direction (lower direction) of the shoulder 12. Therefore, the softened material is made to flow in the advancing direction (lower direction) of the shoulder 12, and as shown in Test Examples described above, the welding strength of the welded workpiece 60 is made higher.

In the present embodiment, the second grooves 22 are formed so as to extend linearly in the radial direction. However, the present embodiment is not limited to this. The second grooves 22 may be formed so as to extend curvedly in the radial direction or may be formed so as to extend linearly or curvedly in the direction along the straight line segment joining two points on the circle of the tip end surface of the shoulder 12.

## Embodiment 5

The friction stir spot welding apparatus according to Embodiment 5 is a friction stir spot welding apparatus that performs friction stir spot welding with respect to a welded workpiece including a first workpiece and a second workpiece. The friction stir spot welding apparatus includes: a pin that is columnar; a shoulder that is cylindrical, the pin being within the shoulder; a rotary driver that rotates the pin and the shoulder about an axis that coincides with a center axis of the pin; and an advance-retreat driver that advances and retreats the pin and the shoulder along the axis. The shoulder is configured such that when the shoulder advances in the welded workpiece, a material softened by plastic flow flows in a retreating direction of the shoulder.

Moreover, in the friction stir spot welding apparatus according to Embodiment 5, the shoulder may be configured such that a hook of the welded workpiece is formed so as to be directed in the retreating direction of the shoulder.

Moreover, in the friction stir spot welding apparatus according to Embodiment 5, a first groove may be formed on an outer peripheral surface of a tip end portion of the shoulder, and the first groove may be formed such that a rear end thereof in a rotational direction of the shoulder is located closer to a base end of the shoulder than a front end thereof in the rotational direction of the shoulder.

The welded workpiece according to Embodiment 5 may be a welded workpiece subjected to the friction stir spot welding by any one of the friction stir spot welding apparatuses according to Embodiment 5.

Moreover, in the welded workpiece according to Embodiment 5, tensile strength of the first workpiece may be higher than that of the second workpiece, and the hook may be formed at the first workpiece which has not yet been subjected to the welding.

Moreover, the welded workpiece according to Embodiment 5 is a welded workpiece subjected to the friction stir spot welding by the friction stir spot welding apparatus and includes the first workpiece and the second workpiece, and the hook is formed in the first workpiece which has not yet been subjected to the welding.

Hereinafter, one example of the friction stir spot welding apparatus and the welded workpiece according to Embodiment 5 will be described with reference to FIGS. 19 to 21B.

## Configuration of Friction Stir Spot Welding Apparatus

FIG. 19 is a schematic diagram showing a schematic configuration of the friction stir spot welding apparatus according to Embodiment 5. FIG. 20 is a perspective view schematically showing the tip end portion of the shoulder of the friction stir spot welding apparatus shown in FIG. 19. An upper-lower direction in FIG. 19 is shown as an upper-lower direction of the friction stir spot welding apparatus.

As shown in FIGS. 19 and 20, the friction stir spot welding apparatus 50 according to Embodiment 5 is the same in basic configuration as the friction stir spot welding apparatus 50 according to Embodiment 1 but is different from the friction stir spot welding apparatus 50 according to Embodiment 1 regarding the shape of the shoulder 12. Since the control configuration of the friction stir spot welding apparatus 50 according to Embodiment 5 is the same as that of the friction stir spot welding apparatus 50 according to Embodiment 1, a detailed explanation thereof is omitted.

Specifically, the shoulder 12 is configured such that when the shoulder 12 advances in the welded workpiece 60, the material softened by the plastic flow flows in the retreating direction of the shoulder 12 (see FIG. 21A). In other words, the shoulder 12 is configured such that the hook 66 is formed at the welded workpiece 60 so as to be directed in the retreating direction of the shoulder 12.

More specifically, the first grooves 21 formed on the outer peripheral surface of the tip end portion of the shoulder 12 are formed such that the front end parts 21a thereof in the rotational direction of the shoulder 12 are located closer to the tip end of the shoulder than the rear end parts 21b thereof in the rotational direction of the shoulder 12. To be specific, the first grooves 21 are formed on the outer peripheral surface of the tip end portion of the shoulder 12 such that the front end parts 21a thereof are located closer to the tip end of the shoulder 12, and the rear end parts 21b thereof are located closer to the base end of the shoulder 12.

In Embodiment 5, the first grooves 21 are formed so as to cover the entire outer peripheral surface of the shoulder 12. However, the present embodiment is not limited to this. For example, one first groove 21 may be formed in a spiral shape so as to cover the entire outer peripheral surface of the shoulder 12. Moreover, instead of the first grooves 21, recesses and/or projections may be provided on the outer peripheral surface of the tip end portion of the shoulder 12 so as to be lined up on a straight line.

The shoulder 12 may be configured such that when the shoulder 12 advances while rotating in the welded workpiece 60, the material softened by the plastic flow flows in the retreating direction of the shoulder 12. The shape of the shoulder 12 is not limited to the above shape. For example, suitable recesses and/or projections may be provided on the outer peripheral surface of the tip end portion of the shoulder 12.

In this case, each of the recesses and/or the projections may be formed so as to include such an inclined portion that a part (for example, a rear end part) thereof in the rotational direction of the shoulder 12 is located closer to the base end of the shoulder 12 than another part (for example, a front end part) thereof in the rotational direction of the shoulder 12. Moreover, the inclined portion may be formed in a linear shape, a curved shape, or a stair shape.

**Operation and Operational Advantage of Friction Stir Spot Welding Apparatus**

Next, the operation of the friction stir spot welding apparatus 50 according to Embodiment 5 will be specifically described with reference to FIGS. 19 to 21B. The following operation is executed in such a manner that the controller 51 reads a program stored in the storage 31.

Each of FIGS. 21A and 21B is a process diagram schematically showing one example of steps of the friction stir spot welding performed by the friction stir spot welding apparatus shown in FIG. 19.

Each of FIGS. 21A and 21B shows an example in which: the plate-shaped first workpiece 61 and the plate-shaped second workpiece 62 are used as the welded workpiece 60; and these workpieces 61 and 62 are laminated on each other and coupled to each other by spot welding. In FIGS. 21A and 21B, the first workpiece 61 is higher in tensile strength than the second workpiece 62 and is placed on the backing structure 56.

Moreover, in FIGS. 21A and 21B, part of the friction stir spot welding apparatus 50 is not shown. Arrows r indicate the rotational directions of the pin 11 and the shoulder 12, and block arrows F indicate directions of forces applied to the first workpiece 61 and the second workpiece 62.

Although forces are applied to the first workpiece 61 and the second workpiece 62 also from the backing structure 56, such forces are not shown in FIGS. 21A and 21B for convenience of explanation. The shoulder 12 is shown by cross hatching to clearly distinguish between the pin 11 and the clamp structure 13.

First, a worker (operator) places the welded workpiece 60 on the supporting surface 56a of the backing structure 56. Next, the worker manipulates the inputter 32 to input execution of welding of the welded workpiece 60 to the controller 51. A robot may place the welded workpiece 60 on the supporting surface 56a of the backing structure 56.

Then, the controller 51 drives the rotary driver 57 to rotate the pin 11 and the shoulder 12 at a preset and predetermined first rotational frequency (for example, 200 to 3,000 rpm) (see Step (1) in FIG. 21A).

Next, while driving the advance-retreat driver 53 (shoulder driver 532) to rotate the pin 11 and the shoulder 12, the controller 51 makes the pin 11, the shoulder 12, and the clamp structure 13 approach the welded workpiece 60 and brings the tip end surface 11a of the pin 11, the tip end surface 12a of the shoulder 12, and the tip end surface 13a of the clamp structure 13 (not shown in FIGS. 21A and 21B) into contact with the front surface 60c of the welded workpiece 60 (see Step (2) in FIG. 21A).

At this time, the controller 51 controls the advance-retreat driver 53 (shoulder driver 532) such that the pin 11, the shoulder 12, and the clamp structure 13 press the welded workpiece 60 by a preset and predetermined first pressing force (for example, a predetermined value within a range of 3 kN to 10 kN) as a whole.

With this, the first workpiece 61 and the second workpiece 62 are sandwiched by the clamp structure 13 and the backing structure 56, and the clamp structure 13 is biased toward the front surface 60c of the welded workpiece 60 by the contraction of the clamp driver 41 to generate clamping force.

Moreover, in this state, since the pin 11 and the shoulder 12 do not advance or retreat, the front surface 60c of the welded workpiece 60 is subjected to "preheating." With this, a constituent material at a contact region of the first workpiece 61 is softened by heat generated by friction, and thus, the plastically flowing portion 60a is generated in the vicinity of the front surface 60c of the welded workpiece 60.

Next, the controller 51 drives the advance-retreat driver 53 such that the tip end surface 11a of the pin 11 sinks relative to the tip end surface 12a of the shoulder 12. The controller 51 may drive the advance-retreat driver 53 (pin driver 531) such that the pin 11 separates from the welded workpiece 60. Moreover, the controller 51 may drive the advance-retreat driver 53 (shoulder driver 532) such that the shoulder 12 is pressed in the welded workpiece 60.

At this time, as shown in Step (3) in FIG. 21A, a softened part of the welded workpiece 60 extends from the first workpiece 61 at the upper side to the second workpiece 62 at the lower side, and the volume of the plastically flowing portion 60a increases. Moreover, a softened material of the plastically flowing portion 60a is pushed away by the shoulder 12 to flow from a position right under the shoulder 12 to a position right under the pin 11. Therefore, the pin 11 retreats and moves upward relative to the shoulder 12.

Moreover, in Embodiment 5, the shoulder 12 is configured such that the material softened by the plastic flow flows in the retreating direction (upper direction) of the shoulder 12. With this, the hook 66 is formed so as to be directed in the retreating direction of the shoulder 12.

Next, the controller 51 acquires the positional information of the tip end portion of the shoulder 12 from the position detector 33. Then, the controller 51 determines whether or not the positional information of the tip end portion of the shoulder 12 acquired in Step S104 has reached the preset and predetermined first position.

When the controller 51 determines that the positional information of the tip end portion of the shoulder 12 has reached the first position, the controller 51 drives the advance-retreat driver 53 (pin driver 531) such that the pin 11 advances toward the welded workpiece 60, or the controller 51 drives the advance-retreat driver 53 (shoulder driver 532) such that the shoulder 12 separates from the welded workpiece 60.

With this, the pin 11 gradually advances toward the first workpiece 61, and the shoulder 12 retreats from the first workpiece 61 (see Step (4) in FIG. 21B). At this time, the softened part of the plastically flowing portion 60a flows from the position right under the pin 11 to the position right under the shoulder 12 (to a recess generated by press-in of the shoulder 12).

Next, the controller 51 controls the advance-retreat driver 53 such that almost no level difference is generated between the tip end surface 11a of the pin 11 and the tip end surface 12a of the shoulder 12 (the tip end surface 11a of the pin 11 and the tip end surface 12a of the shoulder 12 are flush with each other) (see Step (5) in FIG. 21B). With this, the front surface 60c of the welded workpiece 60 is shaped, and a substantially flat surface where recesses are not practically generated is obtained.

Next, the controller 51 drives the advance-retreat driver 53 such that the pin 11, the shoulder 12, and the clamp structure 13 separate from the welded workpiece 60 (Step S108). Next, the controller 51 controls the rotary driver 57 to stop the rotation of the pin 11 and the shoulder 12 (see Step (6) in FIG. 21B) and terminates the friction stir spot welding (step of welding the welded workpiece 60).

With this, since the rotation (and pressing) of the pin 11 and the shoulder 12 during the contact of the pin 11 and the shoulder 12 with the first workpiece 61 and the second workpiece 62 is not applied to the first workpiece 61 and the second workpiece 62, the plastic flow stops at the plastically flowing portion 60a spreading in both the first workpiece 61 and the second workpiece 62, and the plastically flowing portion 60a becomes the welded portion 60b.

In the friction stir spot welding apparatus 50 according to Embodiment 5 configured as above, the shoulder 12 is configured such that the material softened by the plastic flow flows in the retreating direction (upper direction) of the shoulder 12.

With this, the hook 66 is formed so as to be directed in the retreating direction of the shoulder 12, and as shown in Test Examples described below, the hook can be formed at the first workpiece 61 having high tensile strength so as to be larger in height than the hook formed by the conventional shoulder 12 that does not include the first grooves 21. Therefore, the welding strength of the welded workpiece 60 is made higher than the welding strength of the welded workpiece welded by using the conventional friction stir spot welding apparatus.

**Examples**

Next, Examples of the friction stir spot welding apparatuses 50 according to Embodiments 3 (including Modified Example 1) to 5 will be described.

**Example 1**

The friction stir spot welding apparatus 50 according to Embodiment 3 was used as a friction stir spot welding apparatus of Example 1, and the friction stir spot welding apparatus of Example 1 executed the friction stir spot welding.

## Example 2

The friction stir spot welding apparatus 50 according to Modified Example 1 of Embodiment 3 was used as a friction stir spot welding apparatus of Example 2, and the friction stir spot welding apparatus of Example 2 executed the friction stir spot welding.

## Example 3

The friction stir spot welding apparatus 50 according to Embodiment 4 was used as a friction stir spot welding apparatus of Example 3, and the friction stir spot welding apparatus of Example 3 executed the friction stir spot welding.

## Example 4

The friction stir spot welding apparatus 50 according to Embodiment 5 was used as a friction stir spot welding apparatus of Example 4, and the friction stir spot welding apparatus of Example 4 executed the friction stir spot welding.

## Comparative Example 1

A friction stir spot welding apparatus of Comparative Example 1 executed the friction stir spot welding by using a shoulder 12 that is the same in configuration as the conventional shoulder 12 and does not include the first grooves 21 and the second grooves 22.

## Test Result 1

The welded workpieces 60 welded by the friction stir spot welding apparatuses of Comparative Example 1 and Examples 1 and 2 were subjected to the cross tension test (JIS Z 3137) under such conditions that: an aluminum plate (2024-T8) having a thickness of 1.6 mm was used as the second workpiece 62; an aluminum plate (2024-T3) having a thickness of 3.0 mm was used as the first workpiece 61; and the first workpiece 61 was placed on the backing structure 56.

FIGS. 22A and 22B show pictures of sections of the welded workpiece which has been subjected to the friction stir spot welding by using the friction stir spot welding apparatus of Example 1 and has not yet been subjected to the cross tension test, and FIG. 22B shows an enlarged picture of a region (B) shown in FIG. 22A. FIGS. 23A and 23B show pictures of sections of the welded workpiece which has been subjected to the cross tension test after being subjected to the friction stir spot welding by using the friction stir spot welding apparatus of Example 1, and FIG. 23B shows an enlarged picture of a region (B) shown in FIG. 23A.

FIG. 24 is a graph showing results of the cross tension test of the welded workpieces subjected to the friction stir spot welding by using the friction stir spot welding apparatuses of Comparative Example 1 and Examples 1 and 2 and also showing the heights of the hooks.

In FIG. 24, each of the results of the cross tension test when the friction stir spot welding apparatus of Comparative Example 1 was used is shown as 100%, and based on this, the results of the cross tension test when the friction stir spot welding apparatuses of Examples 1 and 2 were used to perform the friction stir spot welding are shown. Moreover, in FIG. 24, a portion at an upper side of a contact surface between the first workpiece 61 and the second workpiece 62 is shown as a positive side, and a portion at a lower side of the contact surface between the first workpiece 61 and the second workpiece 62 is shown as a negative side.

As shown in FIGS. 22A to 24, when the welded workpiece 60 was subjected to the friction stir spot welding by using each of the friction stir spot welding apparatuses of Examples 1 and 2, the hook was formed at the first workpiece 61 (negative side).

Specifically, when the welded workpiece 60 was subjected to the friction stir spot welding by using the friction stir spot welding apparatus of Example 1, the height of the hook was -121 $\mu$m. Moreover, when the welded workpiece 60 was subjected to the friction stir spot welding by using the friction stir spot welding apparatus of Example 2, the height of the hook was -29 $\mu$m. Furthermore, when the welded workpiece 60 was subjected to the friction stir spot welding by using the friction stir spot welding apparatus of Comparative Example 1, the height of the hook was 117 $\mu$m.

Moreover, as shown in FIGS. 23A and 23B, when the welded workpiece 60 subjected to the friction stir spot welding by using the friction stir spot welding apparatus of Example 1 was subjected to the cross tension test, cracks were generated downward, and the workpiece (second workpiece 62) having lower tensile strength broke.

Furthermore, as shown in FIG. 24, when the welded workpiece 60 was subjected to the friction stir spot welding by using each of the friction stir spot welding apparatuses of Examples 1 and 2, the welding strength was higher than when the welded workpiece 60 was subjected to the friction stir spot welding by using the friction stir spot welding apparatus of Comparative Example 1.

These results indicate that the welding strength is made high by configuring the shoulder 12 such that the hook is formed at the workpiece (in Test Result 1, the first workpiece 61) having higher tensile strength.

## Test Result 2

The welded workpieces 60 welded by the friction stir spot welding apparatuses of Comparative Example 1 and Example 1 were subjected to the cross tension test (JIS Z 3137) under such conditions that: an aluminum plate (2024-T3) having a thickness of 3.0 mm was used as the second workpiece 62; an aluminum plate (2024-T3) having a thickness of 3.0 mm was used as the first workpiece 61; and the first workpiece 61 was placed on the backing structure 56.

FIGS. 25A and 25B show pictures of sections of the welded workpiece subjected to the friction stir spot welding by using the friction stir spot welding apparatus of Comparative Example 1. FIG. 25A shows the picture before the cross tension test, and FIG. 25B shows the picture after the cross tension test. FIG. 25A shows an enlarged view of the hook and its vicinity.

FIGS. 26A and 26B show pictures of sections of the welded workpiece subjected to the friction stir spot welding by using the friction stir spot welding apparatus of Example 1.

FIG. 26A shows the picture before the cross tension test, and FIG. 26B shows the picture after the cross tension test. FIG. 26A is an enlarged view of the hook and its vicinity.

As shown in FIG. 25A, when the friction stir spot welding was performed by using the friction stir spot welding apparatus of Comparative Example 1, the hook was formed so as to be directed in the retreating direction (at the second workpiece 62) of the shoulder 12. Moreover, as shown in FIG. 26A, when the friction stir spot welding was performed by using the friction stir spot welding apparatus of Example 1, the hook was formed so as to be directed in the advancing direction (at the first workpiece 61) of the shoulder 12. Then, as shown in FIGS. 25B and 26B, the workpiece where the hook was formed broke.

These results indicate that the hook can be formed so as to be directed in the advancing direction of the shoulder 12 by forming the first grooves 21 such that the front end parts 21a thereof in the rotational direction of the shoulder 12 are located closer to the base end of the shoulder than the rear end parts 21b thereof in the rotational direction of the shoulder 12. Moreover, these results also indicate that by selecting the shape of the shoulder 12, the workpiece that breaks in the welded workpiece 60 can be selected.

**Test Result 3**

The welded workpieces 60 welded by the friction stir spot welding apparatuses of Example 3 and Comparative Example 1 were subjected to the cross tension test (JIS Z 3137) under such conditions that: an aluminum plate (2024-T3) having a thickness of 3.0 mm was used as the second workpiece 62; an aluminum plate (2024-T3) having a thickness of 3.0 mm was used as the first workpiece 61; and the first workpiece 61 was placed on the backing structure 56.

FIGS. 27A and 27B show pictures of sections of the welded workpiece subjected to the friction stir spot welding by using the friction stir spot welding apparatus of Example 3, and

FIG. 27B shows an enlarged picture of a region (B) shown in FIG. 27A. FIG. 28 is a graph showing results of the cross tension test of the welded workpieces subjected to the friction stir spot welding by using the friction stir spot welding apparatuses of Comparative Example 1 and Example 3 and also showing the heights of the hooks.

In FIG. 28, each of the results of the cross tension test when the friction stir spot welding apparatus of Comparative Example 1 was used is shown as 100%, and based on this, the results of the cross tension test when the friction stir spot welding apparatus of Example 3 was used to perform the friction stir spot welding are shown.

As shown in FIGS. 27A to 28, according to the welded workpiece 60 subjected to the friction stir spot welding by using the friction stir spot welding apparatus of Example 3, the height of the hook was made smaller than the height of the hook in the welded workpiece 60 subjected to the friction stir spot welding by using the friction stir spot welding apparatus of Comparative Example 1, and the welding strength was made higher than the welding strength of the welded workpiece 60 subjected to the friction stir spot welding by using the friction stir spot welding apparatus of Comparative Example 1.

This indicates that when the tensile strength of the first workpiece 61 and the tensile strength of the second workpiece 62 are equal to each other, the welding strength is made higher by reducing the height of the hook.

**Test Result 4**

The welded workpieces 60 welded by the friction stir spot welding apparatuses of Comparative Example 1 and Example 4 were subjected to the cross tension test (JIS Z 3137) under such conditions that: an aluminum plate (2024-T3) having a thickness of 3.0 mm was used as the second workpiece 62; an aluminum plate (2024-T3) having a thickness of 5.0 mm was used as the first workpiece 61; and the second workpiece 62 was placed on the backing structure 56.

FIGS. 29A and 29B show pictures of sections of the welded workpieces subjected to the friction stir spot welding by using the friction stir spot welding apparatuses of Comparative Example 1 and Example 4. FIG. 29A shows a picture of a section of the welded workpiece subjected to the friction stir spot welding by using the friction stir spot welding apparatus of Comparative Example 1, and FIG. 29B shows a picture of a section of the welded workpiece subjected to the friction stir spot welding by using the friction stir spot welding apparatus of Example 4.

FIG. 30 is a graph showing results of the cross tension test of the welded workpieces subjected to the friction stir spot welding by using the friction stir spot welding apparatuses of Comparative Example 1 and Example 4 and also showing the heights of the hooks. In FIG. 30, each of the results of the cross tension test when the friction stir spot welding apparatus of Comparative Example 1 was used is shown as 100%, and based on this, the results of the cross tension test when the friction stir spot welding apparatus of Example 4 was used to perform the friction stir spot welding are shown.

As shown in FIGS. 29A, 29B, and 30, according to the welded workpiece 60 subjected to the friction stir spot welding by using the friction stir spot welding apparatus of Example 4, the height of the hook 66 was made larger than the height of the hook in the welded workpiece 60 subjected to the friction stir spot welding by using the friction stir spot welding apparatus of Comparative Example 1, and the welding strength was made higher than the welding strength of the welded workpiece 60 subjected to the friction stir spot welding by using the friction stir spot welding apparatus of Comparative Example 1.

Although not shown, after the welded workpiece 60 subjected to the friction stir spot welding by using the friction stir spot welding apparatus of Example 4 was subjected to the cross tension test, the workpiece (second workpiece 62) having lower tensile strength broke.

These results indicate that the welding strength is made high by configuring the shoulder 12 such that the high hook is formed at the workpiece (in Test Result 4, the first workpiece 61) having higher tensile strength.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the scope of the present invention. In addition, various inventions can be made by suitable combinations of components disclosed in the above embodiments.

## Industrial Applicability

The friction stir spot welding apparatus of the present invention is useful since the welding time is made shorter than those of the conventional friction stir spot welding apparatuses.

## Reference Signs List

| 11 | 11 pin |
| 11a | tip end surface |
| 12 | shoulder |
| 12a | tip end surface |
| 13 | clamp structure |
| 13a | tip end surface |
| 21 | first groove |
| 21a | front end part |
| 21b | rear end part |
| 22 | second groove |
| 31 | storage |
| 32 | inputter |
| 33 | position detector |
| 41 | clamp driver |
| 50 | friction stir spot welding apparatus |
| 51 | controller |
| 52 | tool fixture |
| 53 | advance-retreat driver |
| 55 | backing support |
| 56 | backing structure |
| 56a | supporting surface |
| 57 | rotary driver |
| 60 | welded workpiece |
| 60a | plastically flowing portion |
| 60b | welded portion |
| 60c | front surface |
| 61 | first workpiece |
| 62 | second workpiece |
| 65 | inner wall surface |
| 66 | hook |
| 221 | front end part |
| 222 | rear end part |
| 521 | rotary tool fixture |
| 522 | clamp fixture |
| 531 | pin driver |
| 532 | shoulder driver |
| Xr | axis |

## Claims

1. A friction stir spot welding apparatus comprising:

   a pin that is columnar;
   a shoulder that is cylindrical, the pin being within the shoulder;
   a rotary driver that rotates the pin and the shoulder about an axis that coincides with a center axis of the pin; and
   an advance-retreat driver that advances and retreats the pin and the shoulder along the axis, wherein
   a first groove is formed at a tip end portion of an outer peripheral surface of the shoulder so as to extend in a direction along the center axis of the pin.

2. The friction stir spot welding apparatus according to claim 1, wherein a second groove is formed on a tip end surface of the shoulder so as to extend in a radial direction of the shoulder.

3. A friction stir spot welding apparatus comprising:

   a pin that is columnar;
   a shoulder that is cylindrical, the pin being within the shoulder;
   a rotary driver that rotates the pin and the shoulder about an axis that coincides with a center axis of the pin; and

an advance-retreat driver that advances and retreats the pin and the shoulder along the axis, wherein

a second groove is formed on a tip end surface of the shoulder so as to extend in a radial direction of the shoulder.

**4.** A friction stir spot welding apparatus that performs friction stir spot welding with respect to a welded workpiece including a first workpiece and a second workpiece,

the friction stir spot welding apparatus comprising:

a pin;

a shoulder that is hollow, the pin being within the shoulder;

a rotary driver that rotates the pin and the shoulder about an axis extending in a longitudinal direction of the pin and a longitudinal direction of the shoulder; and

an advance-retreat driver that advances and retreats the pin and the shoulder along the axis, wherein

the shoulder is configured such that when the shoulder advances while rotating in the welded workpiece, a material softened by plastic flow flows in an advancing direction of the shoulder or a retreating direction of the shoulder.

**5.** The friction stir spot welding apparatus according to claim 4, wherein the shoulder is configured such that a hook of the welded workpiece is formed so as to be directed in the advancing direction of the shoulder or the retreating direction of the shoulder.

**6.** The friction stir spot welding apparatus according to claim 4 or 5, wherein:

tensile strength of the first workpiece is higher than tensile strength of the second workpiece; and

the shoulder is configured such that a hook of the welded workpiece is formed at the first workpiece that has not yet been subjected to the welding.

**7.** The friction stir welding apparatus according to any one of claims 4 to 6, wherein a recess and/or a projection are formed on an outer peripheral surface of the shoulder so as to include such an inclined portion that a part thereof in a rotational direction of the shoulder is located closer to a base end of the shoulder than another part thereof in the rotational direction of the shoulder.

**8.** The friction stir spot welding apparatus according to any one of claims 4 to 6, wherein:

a first groove is formed on an outer peripheral surface of a tip end portion of the shoulder; and

the first groove is formed such that a front end thereof in a rotational direction of the shoulder is located closer to a base end of the shoulder than a rear end thereof in the rotational direction of the shoulder.

**9.** The friction stir spot welding apparatus according to any one of claims 4 to 6, wherein:

a first groove is formed on an outer peripheral surface of a tip end portion of the shoulder; and

the first groove is formed such a rear end thereof in a rotational direction of the shoulder is located closer to a base end of the shoulder than a front end thereof in the rotational direction of the shoulder.

**10.** The friction stir spot welding apparatus according to any one of claims 7 to 9, wherein a tip end portion of the first groove is formed at a position away from a tip end of the outer peripheral surface of the shoulder toward a base end portion of the shoulder.

**11.** The friction stir spot welding apparatus according to any one of claims 4 to 10, wherein a second groove is formed on a tip end surface of the shoulder so as to extend in a radial direction of the shoulder or a direction along a straight line segment joining two points on a circle of the tip end surface of the shoulder.

**12.** The friction stir spot welding apparatus according to claim 11, wherein the second groove is formed such that a bottom surface thereof is inclined.

**13.** A welded workpiece subjected to friction stir spot welding by the friction stir spot welding apparatus according to any one of claims 4 to 12.

**14.** A welded workpiece subjected to friction stir spot welding by a friction stir spot welding apparatus, the welded workpiece comprising:

a first workpiece;

a second workpiece; and

a hook in the first workpiece or the second workpiece.

**15.** The welded workpiece according to claim 14, wherein:

tensile strength of the first workpiece is higher than tensile strength of the second workpiece; and

the hook is formed at the first workpiece that has not yet been subjected to the welding.

**16.** A shoulder comprising a recess and/or a projection on an outer peripheral surface of the shoulder, each of the recess and the projection including such an inclined portion that a part thereof in a rotational direction of the shoulder is located closer to a base end of the shoulder than another part thereof in the rotational direction.

FIG.1

<u>12</u>

Xr

21

12a

FIG.2

STORAGE — 31

POSITION DETECTOR — 33

INPUTTER — 32

CONTROLLER — 51

ADVANCE-RETREAT DRIVER — 53

PIN DRIVER — 531

SHOULDER DRIVER — 532

ROTARY DRIVER — 57

FIG.3

START

DRIVE ROTARY DRIVER — S101

DRIVE TOOL DRIVER — S102

DRIVE TOOL DRIVER SUCH THAT PIN SINKS RELATIVE TO SHOULDER — S103

ACQUIRE POSITIONAL INFORMATION FROM POSITION DETECTOR — S104

IS TIP END PORTION OF SHOULDER LOCATED AT FIRST POSITION? — S105

No

Yes

DRIVE TOOL DRIVER SUCH THAT PIN PROJECTS RELATIVE TO SHOULDER — S106

DRIVE TOOL DRIVER SUCH THAT TIP END SURFACE OF PIN COINCIDES WITH TIP END SURFACE OF SHOULDER — S107

DRIVE TOOL DRIVER SUCH THAT TIP END SURFACE OF PIN AND TIP END SURFACE OF SHOULDER SEPARATE FROM WELDED WORKPIECE — S108

STOP ROTARY DRIVER — S109

END

FIG.4

STEP (1)                    STEP (2)                    STEP (3)

41                          41                          41

13                          13    P2 P1 P2             13    P2 P1 P2

12                          12                          12

    r                            r                           r

11          r               11         r                11         r

60                  60c      60                  60c     60                  60c
61                          61    F  F F F   F          61    F   F F F   F
62                          62                          62

56                  60d      56              60d         56              60d
                                        60a                         60a

FIG.5A

FIG.5B

EP 3 932 606 A1

FIG.6

FIG.7

12

Xr

22

12a

FIG.8

FIG.9

EP 3 932 606 A1

(COMPARATIVE EXAMPLE)    (TEST EXAMPLE 1)    (TEST EXAMPLE 2)

INTERFACE

FIG.10A

(TEST EXAMPLE 3)　　　　　　　　　　　　　　　　(TEST EXAMPLE 4)

200 μm　　　　　　　　　　　　　　　　200 μm

FIG.10B

50

UPPER

53

531    532

522

52

521

41

13

57

P1

12

11    P2

60    Xr    P3

61    21

62

56

56a  12a 11a    13a

55

LOWER

FIG.11

12

Xr

r

21a

21b

12a

21

FIG.12

FIG.13A

EP 3 932 606 A1

FIG.13B

STEP (1)　　　　　　STEP (2)　　　　　　STEP (3)

FIG.14A

EP 3 932 606 A1

FIG.14B

50

UPPER

53

531          532

522

52

521

41

13

57

P1

12

11          P2

60     Xr                              P3

61                                    21

22

62

56

56a   12a 11a              13a

LOWER

FIG.15

12

Xr

r

21

222

12a

22

22a

221

FIG.16

FIG.17

<u>12</u>

FIG.18

50

UPPER

53
531        532

522
52
521

41

13

57

P1

12
11        P2

60    Xr        P3

21

61                    62

56

56a  12a  11a        13a

LOWER

FIG.19

12

Xr

r

21b

21a

12a

21

FIG.20

STEP (1)    STEP (2)    STEP (3)

FIG.21A

FIG.21B

EP 3 932 606 A1

FIG.22A

FIG.22B

FIG.23A

FIG.23B

EP 3 932 606 A1

FIG.24

FIG.25A

FIG.25B

FIG.26A

FIG.26B

FIG.27A

FIG.27B

CTS STRENGTH RATIO (%)

FIG.28

FIG.29A

FIG.29B

CTS STRENGTH RATIO (%)

FIG.30

**INTERNATIONAL SEARCH REPORT**

| International application No. |
| --- |
| PCT/JP2020/008285 |

A. CLASSIFICATION OF SUBJECT MATTER
Int.Cl. B23K20/12(2006.01)i
FI: B23K20/12340, B23K20/12342, B23K20/12344

According to International Patent Classification (IPC) or to both national classification and IPC

B. FIELDS SEARCHED

Minimum documentation searched (classification system followed by classification symbols)
Int.Cl. B23K20/12

Documentation searched other than minimum documentation to the extent that such documents are included in the fields searched
Published examined utility model applications of Japan      1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2017-200702 A (UACJ CORP.) 09.11.2017 (2017-11-09), paragraphs [0016]-[0062], fig. 1-10 | 1-16 |
| A | WO 2017/159627 A1 (KAWASAKI HEAVY IND LTD.) 21.09.2017 (2017-09-21), fig. 1-6 | 1-16 |
| A | JP 2015-182430 A (TOYOTA MOTOR CORPORATION) 22.10.2015 (2015-10-22), fig. 3, 4, 7, 8, 11-13 | 1-16 |
| A | JP 2001-259863 A (SUMITOMO LIGHT METAL IND LTD.) 25.09.2001 (2001-09-25), fig. 7 | 1-16 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 02.04.2020 | 14.04.2020 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT

Information on patent family members

International application No.

PCT/JP2020/008285

```
JP 2017-200702 A   09.11.2017    (Family: none)

WO 2017/159627 A1 21.09.2017    US 2019/0070692 A1
                                EP 3431217 A1
                                CN 108778603 A
                                KR 10-2018-0122673 A

JP 2015-182430 A   22.10.2015    US 2017/0136686 A1
                                WO 2015/145253 A1

JP 2001-259863 A   25.09.2001    (Family: none)
```

Form PCT/ISA/210 (patent family annex) (January 2015)

**EP 3 932 606 A1**

## REFERENCES CITED IN THE DESCRIPTION

### Patent documents cited in the description

- JP 2012196682 A